# EUROPEAN PATENT APPLICATION

(11) **EP 4 762 896 A1**
(43) Date of publication of application: **24.06.2026**
(21) Application number: 25224814.1
(22) Date of filing: 18.12.2025
(51) Int. Cl.: A01B 69/04

(54) **PATH GENERATION METHOD, TRAVEL CONTROL SYSTEM AND WORK VEHICLE**

(30) Priority: 19.12.2024 JP 2024224402
(71) Applicant: Kubota Corporation, Osaka 556-8601 (JP)
(72) Inventor: SUYAMA, Tomoya, Sakai-shi, Osaka, 590-0908 (JP); OKUYAMA, Yuji, Sakai-shi, Osaka, 590-0908 (JP)
(74) Representative: Müller-Boré & Partner Patentanwälte PartG mbB

(57) **Abstract**

A method to be executed by one or more computers generates a path for a work vehicle having an implement linked thereto to travel within a field. The path includes a temporary stop position in a peripheral region which is not a work area within the field but is an area provided along at least a portion of an outer periphery of the field. The method includes calculating a space that is defined by a trajectory of the work vehicle and the implement when the work vehicle has performed a predetermined turn, based on a size of the work vehicle, a size of the implement, and a position relationship between the work vehicle and the implement, and determining the temporary stop position based on the space.

## Description

### CROSS REFERENCE TO RELATED APPLICATIONS

This application claims the benefit of priority to Japanese Patent Application No. 2024-224402 filed on December 19, 2024. The entire contents of this application are hereby incorporated herein by reference.

### BACKGROUND OF THE INVENTION

### 1. Field of the Invention

The present invention relates to path generation methods, controllers, travel control systems, work vehicles, processors, and non-transitory computer-readable media including computer programs.

### 2. Description of the Related Art

As attempts in next-generation agriculture, research and development of smart agriculture utilizing ICT (Information and Communication Technology) and loT (Internet of Things) is under way. Research and development is also directed to the automation and unmanned use of tractors or other work vehicles to be used in the field. For example, work vehicles which travel via automatic steering by utilizing a positioning system that is capable of precise positioning, e.g., a GNSS (Global Navigation Satellite System), are coming into practical use.

International Publication No. 2022/107586 describes a work vehicle that is capable of autonomous movement among a plurality of rows of trees in an orchard, such as a vineyard, by using an SLAM (Simultaneous Localization and Mapping) technique that simultaneously performs localization and map generation. International Publication No. 2022/107586 describes, in an orchard, a work vehicle traveling among a plurality of rows of trees, where the work vehicle performs mowing, preventive pest control, or other work by using an implement (agricultural implement) that is linked to the work vehicle.

### SUMMARY OF THE INVENTION

There is a desire to achieve a more efficient travel of a work vehicle having an implement linked thereto within a field. Details thereof will be described later.

Example embodiments of the present invention provide path generation methods, controllers, travel control systems, work vehicles, processors, and non-transitory computer-readable media including computer programs to achieve a more efficient travel of a work vehicle having an implement linked thereto within a field.

According to example embodiments of the present invention, solutions as described in the following Items are provided.

### [Item 1]

A method, to be executed by one or more computers, to generate a path for a work vehicle having an implement linked thereto to travel within a field, the path including a temporary stop position in a peripheral region which is not a work area within the field but is an area provided along at least a portion of an outer periphery of the field, the method including calculating a space that is defined by a trajectory of the work vehicle and the implement when the work vehicle has performed a predetermined turn, based on a size of the work vehicle, a size of the implement, and a position relationship between the work vehicle and the implement, and determining the temporary stop position based on the space.

### [Item 2]

The method of Item 1, wherein the calculating the space includes acquiring information of a turning direction and a turning angle of the predetermined turn, and calculating the trajectory based on the turning direction and the turning angle.

### [Item 3]

The method of Item 1 or 2, wherein the calculating the space includes acquiring information of an upper limit value of a steering angle of the work vehicle that is tolerable when the work vehicle performs the predetermined turn, and calculating the trajectory based on the upper limit value of the steering angle.

### [Item 4]

The method of any one of Items 1 to 3, wherein the calculating the space includes, during travel between the temporary stop position and a travel restart position in the work area after stopping at the temporary stop position, acquiring information of one or more tolerable motions selected from among forward travel, backward travel, right turn, and left turn motions, and calculating the trajectory based on the one or more tolerable motions.

### [Item 5]

The method of any one of Items 1 to 4, wherein the path includes a turning section between the temporary stop position and a travel restart position within the work area after stopping at the temporary stop position.

### [Item 6]

The method of any one of Items 1 to 5, wherein the calculating the space includes acquiring information of a method of linkage of the implement with the work vehicle, calculating the trajectory based on a position relationship between the work vehicle and the implement that depends on the method of linkage, and the information of the method of linkage includes information as to whether the implement is linked to the work vehicle such that an orientation of the implement is fixed relative to an orientation of the work vehicle.

### [Item 7]

The method of Item 6, wherein the calculating the space includes acquiring information of an upper limit value of an angular difference between the orientation of the work vehicle and the orientation of the implement that is tolerable when the work vehicle performs the predetermined turn in a case where the orientation of the implement is not fixed relative to the orientation of the work vehicle, and calculating the trajectory based on the upper limit value of the angular difference.

### [Item 8]

The method of any one of Items 1 to 7, wherein the calculating the space includes calculating a first length of the trajectory along a first direction that is parallel or substantially parallel to an orientation of the work vehicle before the predetermined turn, and within a length of the trajectory along a second direction intersecting the first direction, calculating a second length of a portion of the trajectory that increases in a direction opposite to a direction of the predetermined turn, relative to a length along the second direction of the work vehicle before the predetermined turn.

### [Item 9]

The method of Item 8, wherein the determining the temporary stop position includes determining the temporary stop position so that a rectangle that is determined by the first length and the second length is included in a predetermined region within the peripheral region.

### [Item 10]

The method of Item 9, wherein the predetermined region is in contact with the outer periphery of the field.

### [Item 11]

The method of any one of Items 1 to 10, wherein the outer periphery of the field includes a plurality of sides, and the determining the temporary stop position includes determining the temporary stop position so that the temporary stop position is located in a vicinity of one of the plurality of sides and that an orientation of the work vehicle at the temporary stop position is in a direction that is parallel or substantially parallel to a direction in which the one of the plurality of sides extends.

### [Item 12]

The method of any one of Items 1 to 11, wherein the determining the temporary stop position includes acquiring information as to which factor is to be prioritized between a distance of a connection path that connects the temporary stop position and a travel end position in the work area before stopping at the temporary stop position being short, and a curvature of the connection path being small, and determining the temporary stop position by generating the connection path based on the prioritized factor.

### [Item 13]

The method of any one of Items 1 to 12, wherein the work area includes a plurality of crop rows, and a path by which the work vehicle travels in the work area includes a path by which the work vehicle travels among the plurality of crop rows.

### [Item 14]

The method of Item 13, wherein the path by which the work vehicle travels in the work area further includes a path by which the work vehicle turns in a headland before and after the travel among the plurality of crop rows,

### [Item 15]

A controller configured or programmed to cause a work vehicle to travel along a path that is generated by the method of any one of Items 1 to 14.

### [Item 16]

A travel control system including a processor configured or programmed to generate a path by carrying out the method of any one of Items 1 to 14, and a controller configured or programmed to cause a work vehicle to travel along the path that is generated by the processor.

### [Item 17]

A work vehicle including the travel control system of Item 16, a travel device including a wheel responsible for steering, and a driver to drive the travel device.

### [Item 18]

A processor configured or programmed to generate a path for a work vehicle having an implement linked thereto to travel within a field, the processor including one or more processors, and one or more memories storing a computer program to be executed by the one or more processors, wherein the path includes a temporary stop position in a peripheral region which is not a work area within the field but is an area provided along at least a portion of an outer periphery of the field; and by executing the computer program, the one or more processors perform calculating a space that is defined by a trajectory of the work vehicle and the implement when the work vehicle has performed a predetermined turn, based on a size of the work vehicle, a size of the implement, and a position relationship between the work vehicle and the implement, and determining the temporary stop position based on the space.

### [Item 19]

A non-transitory computer-readable medium including a computer program to be executed by a processor in a processor to generate a path for a work vehicle having an implement linked thereto to travel within a field, the path including a temporary stop position in a peripheral region which is not a work area within the field but is an area provided along at least a portion of an outer periphery of the field, the computer program being executable to cause the processor to perform calculating a space that is defined by a trajectory of the work vehicle and the implement when the work vehicle has performed a predetermined turn, based on a size of the work vehicle, a size of the implement, and a position relationship between the work vehicle and the implement, and determining the temporary stop position based on the space.

### [Item 20]

A controller configured or programmed to perform the method of any one of Items 1 to 14.

### [Item 21]

A non-transitory computer-readable medium including a computer program to be executed by a computer to cause the computer to perform the method of any one of Items 1 to 14.

### [Item 22]

A non-transitory computer-readable medium including a computer program medium including a computer program to be executed by a computer to cause the computer to perform the method of travel control of any one of Items 1 to 14.

### [Item 23]

A path generation system to generate a path for a work vehicle having an implement linked thereto to travel within a field, the system including the controller of Item 20.

### [Item 24]

A processor configured or programmed to generate a path for a work vehicle having an implement linked thereto to travel within a field, wherein the path includes a temporary stop position in a peripheral region which is not a work area within the field but is an area provided along at least a portion of an outer periphery of the field, and the processor is configured or programmed to calculate a space that is defined by a trajectory of the work vehicle and the implement when the work vehicle has performed a predetermined turn, based on a size of the work vehicle, a size of the implement, and a position relationship between the work vehicle and the implement, and to determine the temporary stop position based on the space.

### [Item 25]

A travel control system for a work vehicle including the processor of Item 24, and a controller configured or programmed to cause the work vehicle to travel along the path generated by the processor.

### [Item 26]

A travel control system for a work vehicle including the processor of Item 24, and a controller configured or programmed to cause the work vehicle to travel along the path generated by the processor, and a driver to drive a travel device of the work vehicle, wherein the controller is configured or programmed to cause the work vehicle to travel via self-driving, by controlling the driver based on the path generated by the processor.

Example embodiments of the present invention may be implemented using devices, systems, methods, integrated circuits, computer programs, non-transitory computer-readable storage media, or any combination thereof. The computer-readable storage media may be inclusive of volatile storage media, or non-volatile storage media. The device may include a plurality of devices. In the case where the device includes two or more devices, the two or more devices may be provided within a single apparatus, or divided over two or more separate apparatuses.

According to example embodiments of the present invention, travel control systems, work vehicles, and methods of travel control that enable efficient performance of iterative operations (including travel and other operations) of a work vehicle are provided.

The above and other elements, features, steps, characteristics and advantages of the present invention will become more apparent from the following detailed description of the example embodiments with reference to the attached drawings.

### BRIEF DESCRIPTION OF THE DRAWINGS

FIG. **1** is a side view schematically showing an example of a work vehicle and an implement according to an example embodiment of the present invention.
FIG. **2** is a diagram schematically showing an example of a path for a work vehicle having an implement linked thereto to travel within a field.
FIG. **3** is a flowchart showing an example of a procedure of path generation according to an example embodiment of the present invention.
FIG. **4** is a diagram schematically showing another example of a path for a work vehicle having an implement linked thereto to travel within a field.
FIG. **5A** is a block diagram showing an example schematic configuration of a travel control system **1000** according to an example embodiment of the present invention.
FIG. **5B** is a block diagram showing an example configuration of a processor **530.**
FIG. **5C** is a schematic diagram showing an example configuration of a travel control system according to an example embodiment of the present invention.
FIG. **6** is a block diagram schematically showing a series of processes of path generation for a work vehicle that may be executed by a processor according to an example embodiment of the present invention.
FIG. **7** is a flowchart showing an example of a process to be performed at step **S200.**
FIG. **8** is a schematic diagram for describing an example method of calculating a first space.
FIG. **9A** is a schematic diagram for describing an example method of determining a temporary stop position based on a calculated first space.
FIG. **9B** is a schematic diagram for describing an example method of determining a temporary stop position based on a calculated first space.
FIG. **10** is a flowchart showing another example of the process to be performed at step **S200.**
FIG. **11** is a flowchart showing another example of the process to be performed at step **S200.**
FIG. **12** is a flowchart showing another example of the process to be performed at step **S200.**
FIG. **13** is a flowchart showing another example of the process to be performed at step **S200.**
FIG. **14** is a schematic top view for describing a position relationship between a work vehicle and an implement that is linked to the work vehicle via towing.
FIG. **15** is a flowchart showing an example of a process to be performed at step **S400.**
FIG. **16** is a schematic diagram for describing an example method of determining a temporary stop position.
FIG. **17** is a schematic side view showing a work vehicle having another implement linked thereto.
FIG. **18** is a schematic diagram for describing an example method of calculating a first space.
FIG. **19** is a schematic diagram for describing an example method of calculating a first space.
FIG. **20** is a block diagram schematically showing an example configuration for a work vehicle and an implement according to an example embodiment of the present invention.

### DETAILED DESCRIPTION OF THE EXAMPLE EMBODIMENTS

In the present specification, a "work vehicle" means a vehicle for use in performing work in a work area. A "work area" is any place where work may be performed, e.g., a field, a mountain forest, or a construction site. A "field" is any place where agricultural work may be performed, e.g., an orchard, an agricultural field, a paddy field, a cereal farm, or a pasture. A work vehicle can be an agricultural machine such as a tractor, a rice transplanter, a combine, a vehicle for crop management, or a riding mower, or a vehicle for non-agricultural purposes such as a construction vehicle or a snowplow vehicle. A work vehicle may be configured so that an implement (also referred to as a "task device" or a "task apparatus") that is suitable for the content of work can be attached to at least one of its front and its rear. In particular, an implement that is attached to an agricultural tractor may be referred to as an "agricultural implement". Traveling of a work vehicle that occurs while the work vehicle performs work by using an implement may be referred to as "tasked travel". The "operation" of a work vehicle includes not only travel of the work vehicle but also other operations.

The methods of linking an implement to a work vehicle are generally categorized into "direct mounting" or "towing". In the case of direct mounting, the implement is attached to the front or the rear of the work vehicle in such a manner that the orientation of the implement is fixed relative to the orientation of the work vehicle. An implement that is linked via direct mounting may basically be configured so that it never touches the ground during movement (i.e., travel) of the work vehicle. In the case of towing, the implement is linked to the rear of the work vehicle in such a manner that the orientation of the implement is not fixed relative to the orientation of the work vehicle, and the implement is to be towed by the work vehicle. A towing type implement may have a wheel(s). A towing type implement may or may not have motive power for movement (travel) on its own.

In the present specification, unless otherwise specified, the "orientation" of a work vehicle or an implement is meant to be the orientation of the work vehicle or implement in a two-dimensional coordinate system. For example, it may be the orientation of the work vehicle or implement as projected onto an xy plane (i.e., the horizontal plane) where an opposite direction of the direction of gravity (vertically upward direction) defines the +z direction.

"Self-driving" means controlling the travel of a vehicle based on the action of a controller, rather than through manual operation of a driver. During self-driving, not only the travel of the vehicle, but also the task operation (e.g., the operation of the implement) may also be automatically controlled. A vehicle that is traveling via self-driving is said to be "self-traveling". The controller may be configured or programmed to control at least one of steering, adjustment of traveling speed, and starting and stopping of travel as are necessary for the travel of vehicle. In the case of controlling a work vehicle having an implement attached thereto, the controller may control be configured or programmed to operations such as raising or lowering of the implement, starting and stopping of the operation of the implement, and the like. Travel via self-driving includes not only the travel of a vehicle toward a destination along a predetermined path, but also the travel of merely following a target of tracking. A vehicle performing self-driving may operate not only in a self-driving mode but also in a manual driving mode of traveling through manual operation of the driver. Traveling through manual operation of the driver is referred to as "manual traveling". "Manual operation of a driver" includes not only manual operation by a driver on the vehicle, but also remote manipulation by a driver (operator) outside the vehicle. A vehicle performing self-driving may travel partly based on manual operation of the driver. The steering of a vehicle that is based on the action of a controller, rather than manual operation of the driver, is referred to as "automatic steering". A portion or an entirety of the controller may be external to the vehicle. Between the vehicle and a controller that is external to the vehicle, communication of control signals, commands, data, or the like may be performed. A vehicle performing self-driving may autonomously travel while sensing the surrounding environment, without any person being involved in the control of the travel of the vehicle. A vehicle that is capable of autonomous travel can travel in an unmanned manner. During autonomous travel, detection of obstacles and avoidance of obstacles may be performed.

A "crop row" is a row of agricultural items, trees, or other plants that may grow in rows on a field, e.g., an orchard or an agricultural field, or in a forest or the like. In the description of example embodiments of the present invention, a "crop row" encompasses a "row of trees".

Hereinafter, example embodiments of the present invention will be described more specifically. Note however that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand example embodiments of the present invention, are not intended to limit the scope of claims. In the following description, component elements having identical or similar functions are denoted by identical reference numerals.

The following example embodiments are only exemplary, and the techniques according to the present invention are not limited to the following example embodiments. For example, numerical values, shapes, materials, steps, orders of steps, etc., that are indicated in the following example embodiments are only exemplary, and admit of various modifications so long as it makes technological sense. Any one example embodiment may be combined with another.

A path generation method according to an example embodiment of the present invention, and a travel control system to cause a work vehicle along a path that is generated by the path generation method will be described. A path generation method according to an example embodiment of the present invention is a method of generating a path for a work vehicle having an implement linked thereto to travel within a field, and a path generation method and a travel control system according to an example embodiment of the present invention are applicable to the travel of a work vehicle having an implement linked thereto within a field.

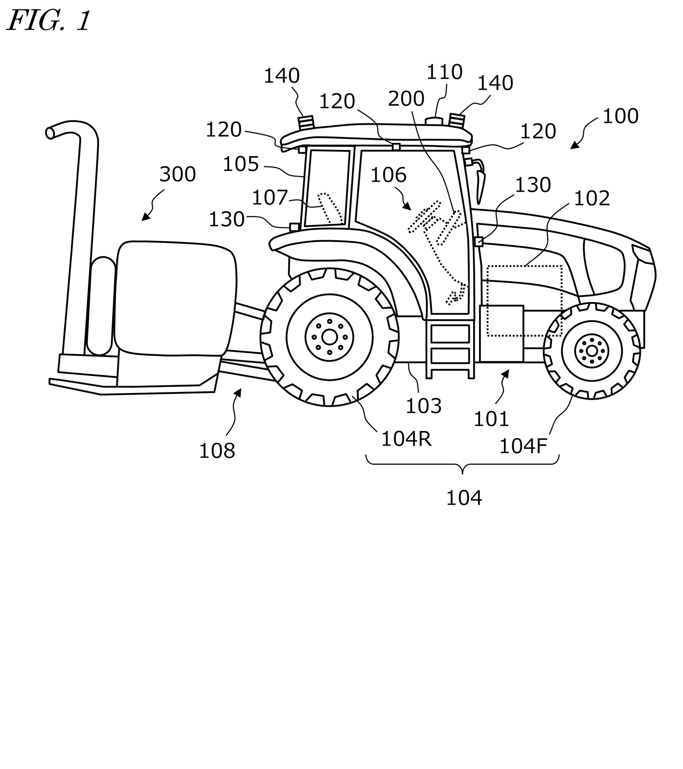

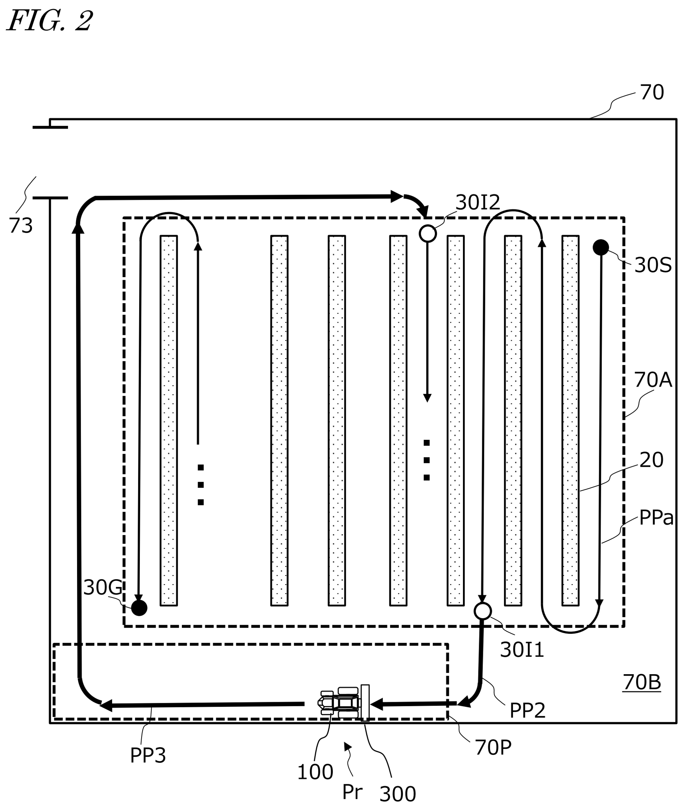

FIG. **1** is a side view schematically showing an example of a work vehicle **100** and an implement **300** that is linked to the work vehicle **100.** FIG. **2** is a diagram schematically showing an example path by which the work vehicle **100** with the implement **300** linked thereto travels within a field **70.** As shown in FIG. **2****,** while performing work by using the implement **300,** the work vehicle **100** travels along a path **PPa** within a work area **70A** of the field **70.** The work area **70A** includes a plurality of crop rows **20** as is illustrated, for example. In a case where the field **70** is an orchard such as a vineyard, for example, the crop rows **20** may be rows of trees. In the work area **70A,** while traveling among the plurality of crop rows **20** along the path **PPa** from a start point **30S** to an end point **30G** of the path **PPa,** the work vehicle **100** performs a predetermined task using the implement **300** (e.g., seeding, manure spreading, mowing, preventive pest control, or the like). The path **PPa** by which the work vehicle **100** travels in the work area **70A** further includes a paths of turning in a headland before and after the travel between crop rows **20.**

Work that is performed by using the implement **300** includes agricultural work that is performed while consuming agricultural materials such as seeds, fertilizers, chemical agents, or seedlings (which hereinafter may simply be referred to as "materials"), for example. If the material becomes short while the work vehicle **100** is traveling at the same time of performing work in the work area **70A,** it becomes necessary to refill the material. In such a case, in order to refill the material, the work vehicle **100** moves to in a vicinity of outer periphery of the field **70,** makes a temporary stop, and then receives supply of the material. FIG. **2** illustrates the work vehicle **100** being stopped at a temporary stop position **Pr.** After having the material refilled at the temporary stop position **Pr,** the work vehicle **100** returns to the work area **70A** to again perform tasked travel in the work area **70A.**

While traveling in any path that connects the temporary stop position **Pr** located outside the work area **70A** and the path **PPa** inside the work area **70A,** the work vehicle **100** may need to turn. For example, in the illustrated example, paths connecting the temporary stop position **Pr** and the path **PPa** inside the work area **70A** include a connection path **PP2** that connects the temporary stop position **Pr** and a work end position (which may hereinafter be referred to as a "travel end position") **3011** in the work area **70A** before stopping at the temporary stop position **Pr,** and a connection path **PP3** that connects the temporary stop position **Pr** and a work restart position (which may hereinafter be referred to as a "travel restart position") **3012** in the work area **70A** after stopping at the temporary stop position **Pr.** Both of the connection paths **PP2** and **PP3** include a turning section. In particular, regarding the turning section of the connection path **PP3** after stopping at the temporary stop position **Pr,** a temporary stop position **Pr** needs to be determined that accounts for a space required for turning by the work vehicle **100** and the implement **300** being linked to the work vehicle **100.** For example, the greater the size of the implement **300** is, the greater the required space for turning is. Furthermore, in a case where the implement **300** is linked to the work vehicle **100** via towing, the space must accommodate a possible movement of the implement **300** when the work vehicle **100** begins to travel, which may occur in an opposite direction to the direction in which the work vehicle **100** is steered. Placing the temporary stop position **Pr** at a position spaced away from the outer periphery of the field **70** can ensure a sufficient space for turning by the work vehicle **100** and the implement **300.** On the other hand, vehicles to supply materials are likely to be located outside the field **70.** Thus, from the standpoint of efficient refilling of materials, the temporary stop position is preferably as close to the outer periphery of the field **70** as possible.

As will be described below, according to an example embodiment of the present invention, while ensuring a space for turning the work vehicle **100** and the implement **300,** the temporary stop position **Pr** can be determined at a position that is close to the outer periphery of the field **70,** based on the size of the implement **300** and the position relationship of the implement **300** with the work vehicle **100** (e.g., the manner of being linked to the work vehicle **100).** Therefore, the work vehicle **100** having the implement **300** linked thereto can efficiently travel within the field **70.** During tasked travel within the work area **70A,** the required timing of material refill may differ each time, which implies that the temporary stop position **Pr** and the paths connecting the temporary stop position **Pr** and the path **PPa** inside the work area **70A** may differ each time. According to an example embodiment of the present invention, path generation can be flexibly performed in accordance with the timing of material refill, whereby the efficiency of tasked travel may be improved. A path generation method and a travel control system according to an example embodiment of the present invention can be used irrespective of whether the implement is linked to the work vehicle by via direct mounting or via towing.

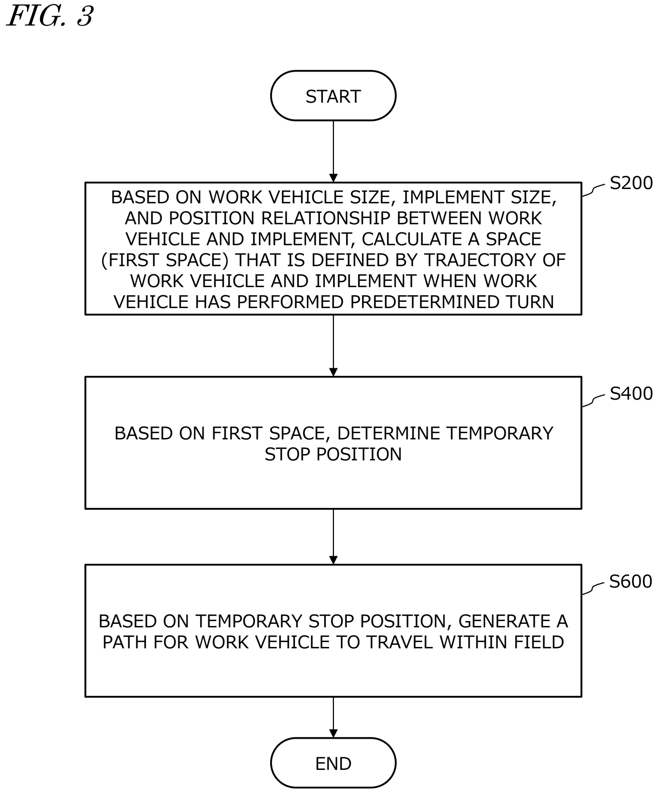

FIG. **3** is a flowchart showing an example of a procedure of path generation according to an example embodiment of the present invention. The path generation method according to the present example embodiment of the present invention, to be executed by one or more computers, is a method that generates a path by which the work vehicle **100** with the implement **300** linked thereto travels within the field **70.** The path includes a temporary stop position **Pr** that is located in a peripheral region **70B** which is not the work area **70A** within the field **70** but is an area provided along at least a portion of the outer periphery of the field **70.** As shown in FIG. **3****,** the procedure of path generation includes calculating a space that is defined by a trajectory of the work vehicle **100** and the implement **300** when the work vehicle **100** has performed a predetermined turn, based on the size of the work vehicle **100,** the size of the implement **300,** and the position relationship between the work vehicle **100** and the implement **300** (step **S200),** determining the temporary stop position **Pr** based on the space calculated at step **S200** (step **S400),** and generating a path by which the work vehicle **100** travels within the field **70** based on the temporary stop position **Pr** (step **S600).** In the present specification, to calculate (or determine) based on a certain element means that the element affects the calculation (or determination) in some ways, and does not preclude any other element from affecting the calculation (or determination). For example, at step **S400,** the temporary stop position **Pr** may be determined based on the space calculated at step **S200** as well as other factors. The same also applies to anywhere the expression "based on..." is used in contexts outside calculation or determination.

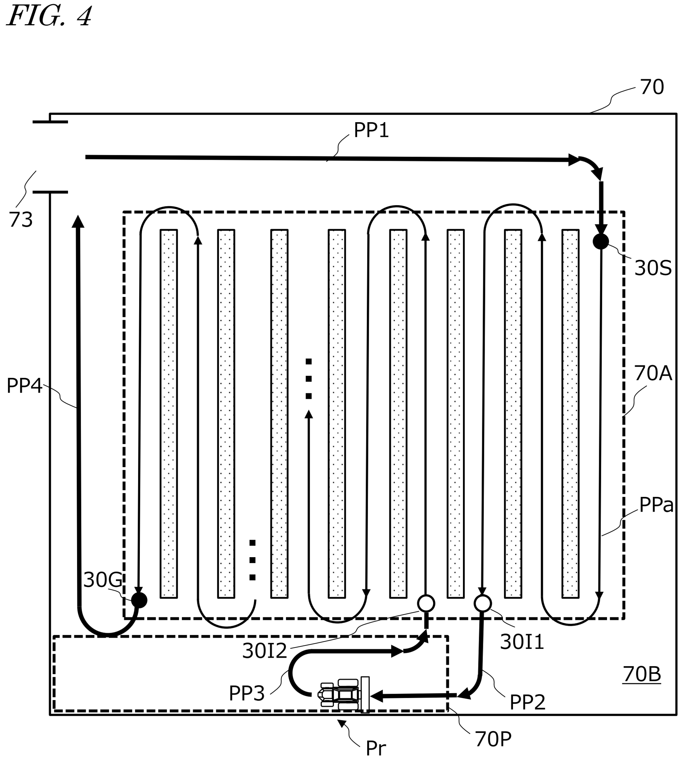

FIG. **4** is a diagram schematically showing another example of a path by which the work vehicle **100** with the implement **300** linked thereto travels within the field **70.** The example shown in FIG. **4** includes a path of stopping at a temporary stop position **Pr** and thereafter making a "U" turn. Furthermore, as in the example shown in FIG. **4****,** the path by which the work vehicle **100** with the implement **300** linked thereto travels within the field **70** may further include a path **PP1** that connects an entrance/exit **73** of the field **70** to the start point **30S** of the path **PPa** inside the work area **70A** and/or a path **PP4** that connects the end point **30G** of the path **PPa** inside the work area **70A** to the entrance/exit **73** of the field **70.**

In the illustrated example, a work end position **3011** in the work area **70A** before stopping at the temporary stop position **Pr** and a work restart position **3012** in the work area **70A** after stopping at the temporary stop position **Pr** are shown to be at different positions. Alternatively, however, they may be identical.

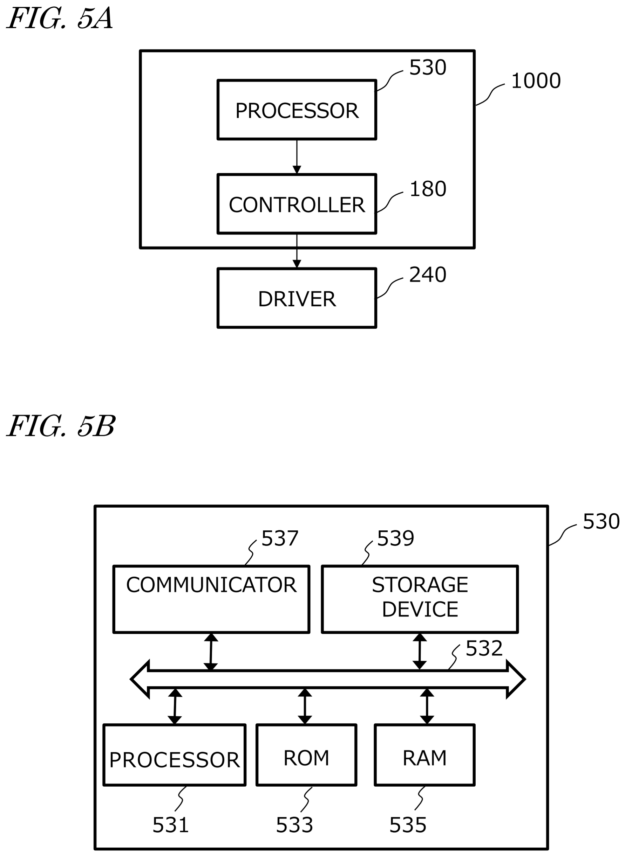

FIG. **5A** is a block diagram showing an example schematic configuration of a travel control system **1000** according to an example embodiment of the present invention. The travel control system **1000** includes: a processor **530** that generates a path by carrying out the path generation method according to the present example embodiment of the present invention, and a controller **180** configured or programmed to cause work vehicle **100** to travel along the path that is generated by the processor **530.**

The travel control system **1000** may be mounted to the work vehicle **100,** and a portion or an entirety of the processing performed by the travel control system **1000** may be executed by one or more computers located outside the work vehicle 100.

The processor **530** may be a computer or computers configured or programmed to execute the path generation method according to the present example embodiment of the present invention. The processor **530** may be mounted to the work vehicle **100,** or one or more computers located outside the work vehicle **100** may be allowed to function as a portion or an entirety of the processor **530.** The processor **530** may include one or more processors and one or more memories. A portion or an entirety of the processing performed by the processor **530** may be performed inside a sensor group that is mounted to the work vehicle **100,** for example. In a case where at least a portion of the processor **530** is included in the work vehicle **100,** the processor **530** and the sensor group are connected so as to be capable of communication via a bus, for example. Moreover, one or more computers that are included in one or more server computers connected to a network and/or a terminal device connected to a network may function as a portion or an entirety of the processor **530.**

The controller **180** may be a computer or computers that cause(s) the work vehicle **100** to travel along a path that is generated by the processor **530.** The controller **180** may be realized by one or more electronic control units (ECU) that are mounted to the work vehicle **100,** for example. The controller **180** can be configured or programmed to realize self-traveling of the work vehicle **100.** By controlling a driver **240** that drives a travel device of the work vehicle **100** based on a path having been generated by the processor **530,** the controller **180** can cause the work vehicle **100** to perform self-traveling along a path that is generated by the processor **530.** While causing the work vehicle **100** to perform self-traveling, the travel control system **1000** may cause the processor **530** to generate or modify a target path for the work vehicle **100** as need be. For example, a target path including a temporary stop position may be generated as material refilling becomes necessary while the work vehicle **100** is performing tasked travel within the work area **70A.** Alternatively, the remaining amount of a material may be detected while the work vehicle **100** is performing tasked travel within the work area **70A,** and based on the remaining amount of the material, a target path including a temporary stop position may be generated (or modified) as need be. Note that the path generation method according to the present example embodiment of the present invention may generate a path for manual traveling of the work vehicle **100.** In other words, based on a path that is generated by the processor **530,** a user may perform manual traveling of the work vehicle **100.**

FIG. **5B** is a block diagram showing an example configuration of the processor **530.** In the example of FIG. **5B****,** the processor **530** includes a processor **531,** a ROM (Read Only Memory) **533,** a RAM (Random Access Memory) **535,** a communicator **537,** and a storage device **539.** These component elements may be connected to one another via a bus **532.**

The processor **531** may be a semiconductor integrated circuit, also called a central processing unit (CPU) or a microprocessor. The processor **531** may include a graphics processing unit (GPU). The processor **531** consecutively executes a computer program describing predetermined instructions and being stored in the ROM **533,** and achieves processes that are necessary for the path generation according to the present example embodiment of the present invention. The processor **530** may include a plurality of processors **531.** The plurality of processors **531** may work in cooperation to perform the processes that are necessary for the path generation according to the present example embodiment of the present invention. A portion or an entirety of the processor **531** may be an FPGA (Field Programmable Gate Array), an ASIC (Application Specific Integrated Circuit), or an ASSP (Application Specific Standard Product) incorporating a CPU.

The communicator **537** is an interface to perform data communications between the processor **530** and an external computer. The communicator **537** is capable of wired communications via a CAN (Controller Area Network) or the like, or wireless communications compliant with the Bluetooth (registered trademark) standards and/or the Wi-Fi (registered trademark) standards.

The storage device **539** is able to store sensor data acquired from the sensor group **520,** sensor data currently under processing, data currently under processing for generating cut-point data, etc. The storage device **539** includes a hard disk drive or a non-volatile semiconductor memory, for example.

An example of the "controller" in an example embodiment of the present invention is a computer that includes at least one processor and at least one memory storing a computer program (code) defining control processes to be executed by the processor. Another example of the "controller" is a computer equipped with an FPGA (Field-Programmable Gate Array), an ASSP (Application Specific Standard Product), an ASIC (Application-Specific Integrated Circuit), or other hardware accelerators configured to execute the control processes.

Similarly, an example of the "processor" in an example embodiment of the present invention is a computer including at least one processor and at least one memory storing a computer program (code) defining operating processes to be executed by the processor. Another example of the "processor" is a computer equipped with an FPGA, an ASIC, or other hardware accelerators configured to execute the operating process.

A "processor" in an example embodiment of the present invention is a hardware electronic circuit such as a CPU (Central Processing Unit), a GPU (Graphics Processing Unit), a DSP (Digital Signal Processor), an ISP (Image Signal Processor), or an NPU (Neural Network Processing Unit). A "memory" is a hardware electronic circuit such as a ROM (Read Only Memory) or a RAM (Random Access Memory). A portion of the memory may be a storage medium that is connected to the processor via interconnects or a network. These hardware electronic circuits may be implemented by one or more integrated circuits (IC) or large-scale integrated circuits (LSI). Each functional unit or block and its associated components within the electronic circuit may be individually manufactured as an individual integrated circuit chip, or some or all of these functional units or blocks may be combined so as to be manufactured as a single integrated circuit chip.

A program defining the operation of a processor is designed so that the processor will execute one or more functions, manipulations, steps, or process according to an example embodiment of the present invention.

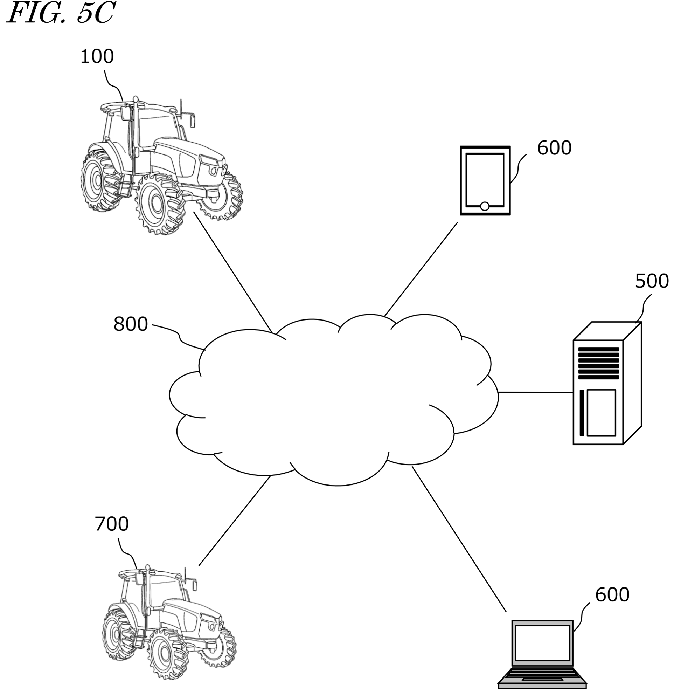

FIG. **5C** is a schematic diagram showing an example configuration of the travel control system according to the present example embodiment of the present invention. Some or all functions of the processor **530** may be realized by a server(s) (computer(s)) **500** and/or a terminal device(s) **600** (including mobile types and stationary types) that is connected to the communicator **537** of the processor **530** via a communications network **800.** To such a communications network **800,** another work vehicle (e.g., a tractor) **700** may be connected, and communications may be performed between the work vehicle **100** having the processor **530** and the other work vehicle **700.** Via the communications network **800,** a portion of the data used in the processing by the processor **530** may be fed from the other work vehicle **700** to the processor **530.**

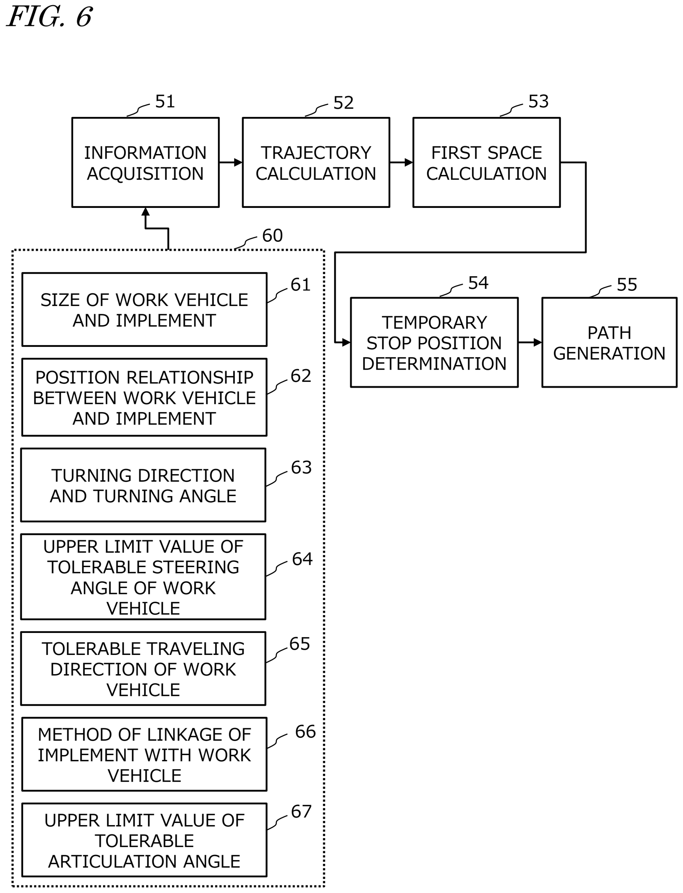

FIG. **6** is a block diagram schematically showing a series of processes of path generation for the work vehicle **100** that may be executed by the processor **530** according to an example embodiment of the present invention. The processor **530** may be configured or programmed to perform processes including information acquisition **51** (i.e., acquiring necessary information), trajectory calculation **52** (i.e., calculating a trajectory of the work vehicle **100** and the implement **300** when the work vehicle **100** has performed a predetermined turn), first space calculation **53** (i.e., calculating a first space), temporary stop position determination **54** (i.e., determining a temporary stop position **Pr),** and path generation **55** (i.e., generating a path by which the work vehicle **100** travels within the field **70).** Based on the information acquired in the information acquisition **51,** the process of trajectory calculation **52** is performed. Based on the trajectory that is calculated in the trajectory calculation **52,** the process of first space calculation **53** is performed. Based on the first space that is calculated in the first space calculation **53,** the process of temporary stop position determination **54** is performed. Based on the temporary stop position **Pr** that is determined in the temporary stop position determination **54,** the process of path generation **55** is performed. In the information acquisition **51,** the processor **530** may acquire information from a storage device that is internal or external to the work vehicle **100,** or acquire information based on a user input. Although FIG. **6** illustrates examples of information **60** that may be input to the processor **530** in the information acquisition **51,** these are merely examples and are not limiting. It is not necessary to acquire all of these pieces of information, and one or more pieces of information (input(s)) may be used in combination. Information (input(s)) other than what is illustrated may further be combined. Specific examples of information **60** may include the size **61** of the work vehicle and the implement, the position relationship **62** between the work vehicle and the implement, the turning direction and turning angle **63,** the upper limit value **64** of a tolerable steering angle of the work vehicle, the tolerable traveling direction **65** of the work vehicle, the method of linkage **66** of the implement with the work vehicle, the upper limit value **67** of tolerable articulation angle, and so on. Processes using the respective specific examples of information **60** will be described below.

Details of the process to be performed at each of the steps shown in FIG. **3** and specific examples thereof will be described.

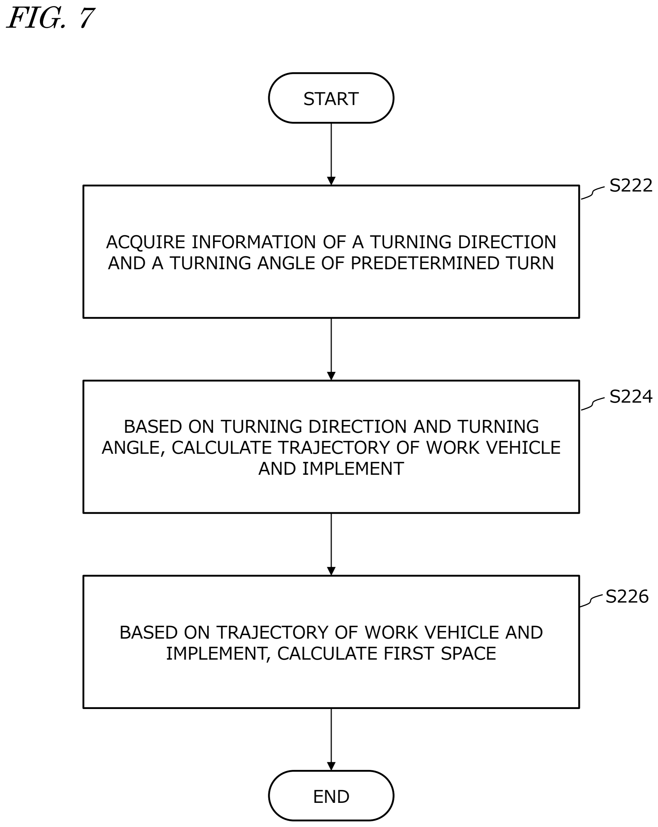

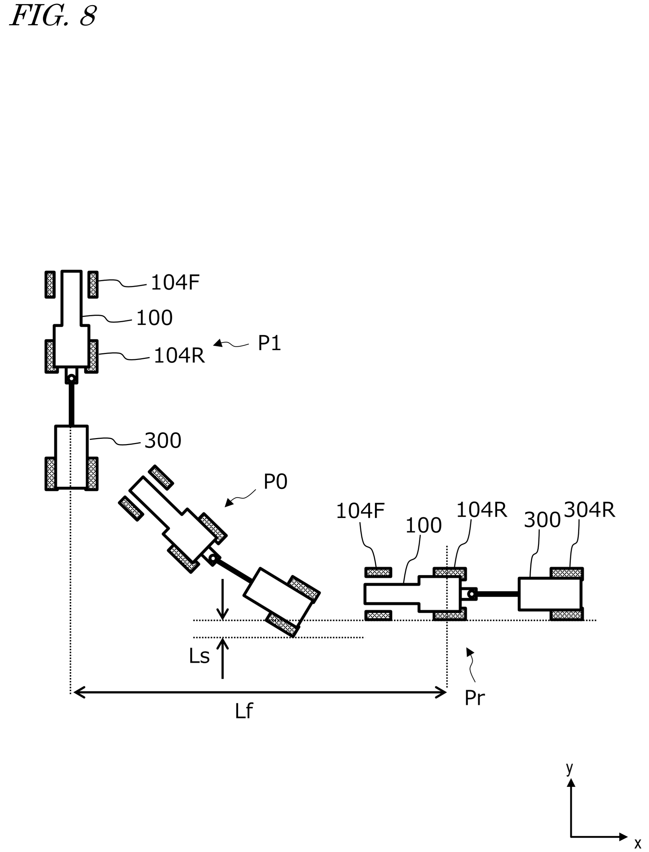

With reference to FIG. **7** and FIG. **8****,** an example of a process to be performed at step **S200** will be described. FIG. **7** is a flowchart showing an example of a process to be performed at step **S200.** As described above, at step **S200,** a space that is defined by a trajectory of the work vehicle **100** and the implement **300** when the work vehicle **100** has performed a predetermined turn (which may hereinafter be referred to as a "first space") is calculated, based on the size of work vehicle **100,** the size of the implement **300,** and the position relationship between the work vehicle **100** and the implement **300.**

FIG. **8** is a schematic diagram for describing an example method of calculating a first space, illustrating how the work vehicle **100** may make a movement from a temporary stop position **Pr,** through position **P0**, and to position **P1,** while turning. It is assumed that the work vehicle **100** completes the turn at position **P1.** In the example FIG. **8****,** an implement **300** having wheels **304R** is linked to the work vehicle **100** via towing.

As shown in FIG. **7****,** for example, at step **S200,** the processes of steps **S222, S224** and **S226** below may be performed.

At step **S222,** information of a turning direction and a turning angle of the predetermined turn is acquired. Information of the turning direction includes information as to clockwise or counterclockwise, for example. Information of the turning angle includes information as to the degree by which the orientation of the work vehicle **100** is changed through the predetermined turn, for example. In the example of FIG. **8****,** the orientation of the work vehicle **100** before the turn (i.e., the orientation of the work vehicle **100** at the temporary stop position **Pr)** is the -x direction in the figure, the orientation of the work vehicle **100** after the turn (i.e., the orientation of the work vehicle **100** at position **P1)** is the +y direction in the figure, the turning direction is clockwise, and the turning angle is 90°.

Such information concerning the turn may be acquired based on a user input, or acquired based on sensor data of the surrounding environment of the work vehicle **100** that is acquired while the work vehicle **100** is traveling, for example. The sensor data of the surrounding environment of the work vehicle **100** may be acquired by an external sensor(s) (e.g., camera(s), a LiDAR sensor(s)) that is included in the work vehicle **100,** for example. Information concerning the predetermined turn may be acquired based further on terrain data or map data of the field **70** as recorded to a storage device that may be internal or external to the work vehicle **100.**

At step **S224,** based on the information of the turning direction and the turning angle of the predetermined turn as acquired in step **S222,** a trajectory of the work vehicle **100** and the implement **300** when the work vehicle **100** has performed the predetermined turn is calculated. The trajectory of the work vehicle **100** and the implement **300** may be determined through a simulation, or determined by using a predetermined relational expression or a model expression. The size of the work vehicle **100,** the size of the implement **300,** and the position relationship between the work vehicle **100** and the implement **300** are also used in the trajectory calculation. The size of the work vehicle **100** includes a length along the front-rear direction and a length (width) along the right-left direction of the work vehicle **100.** The size of the implement **300** includes a length along the front-rear direction and a length (width) along the right-left direction of the implement **300.** The information of the implement **300** is recorded in a storage device that may be internal or external to the work vehicle **100** in association with information of the type (model) of the implement **300,** for example. An example of the trajectory calculation method will be described later.

At step **S226,** based on the trajectory calculated in step **S224,** a first space is calculated. In the example of FIG. **8****,** calculating the first space includes, regarding the trajectory of the work vehicle **100** and the implement **300** when the work vehicle **100** has performed the predetermined turn, determining the following lengths, for example:
· a length (which may be referred to as a "first length") **Lf** of the trajectory along a direction (which may be referred to as a "first direction") that is parallel or substantially parallel to the orientation of the work vehicle **100** (-x direction in the figure) before the turn, and
· within a length of the trajectory along a direction (which may be referred to as "second direction") intersecting (e.g., orthogonal to) the first direction, a length (which may be referred to as a "second length") **Ls** of a portion of the trajectory that increases in a direction opposite to the direction of the turn, relative to a length along the second direction of the work vehicle **100** before the turn.

The first length **Lf** is used as a value representing a length, along the traveling direction, that is required for turning. As is illustrated, for example, the first length **Lf** may be a distance along the first direction from the axle of the rear wheels **104R** of the work vehicle **100** before the turn (i.e., the work vehicle **100** at the temporary stop position **Pr)** to a center line (i.e., a straight connecting the midpoint between the line right and left front wheels **104F** and the midpoint between the right and left rear wheels **104R)** of the work vehicle **100** after the turn (i.e., the work vehicle **100** at position **P1).** The second length **Ls** is used as a value representing a length, along the width direction, of a swell associated with the turn that occurs in the opposite direction to the traveling direction.

At step **S400,** a temporary stop position **Pr** is determined based on the first space calculated at step **S226.** For example, the temporary stop position **Pr** is determined based on the first length **Lf** and the second length **Ls** calculated at step **S226.**

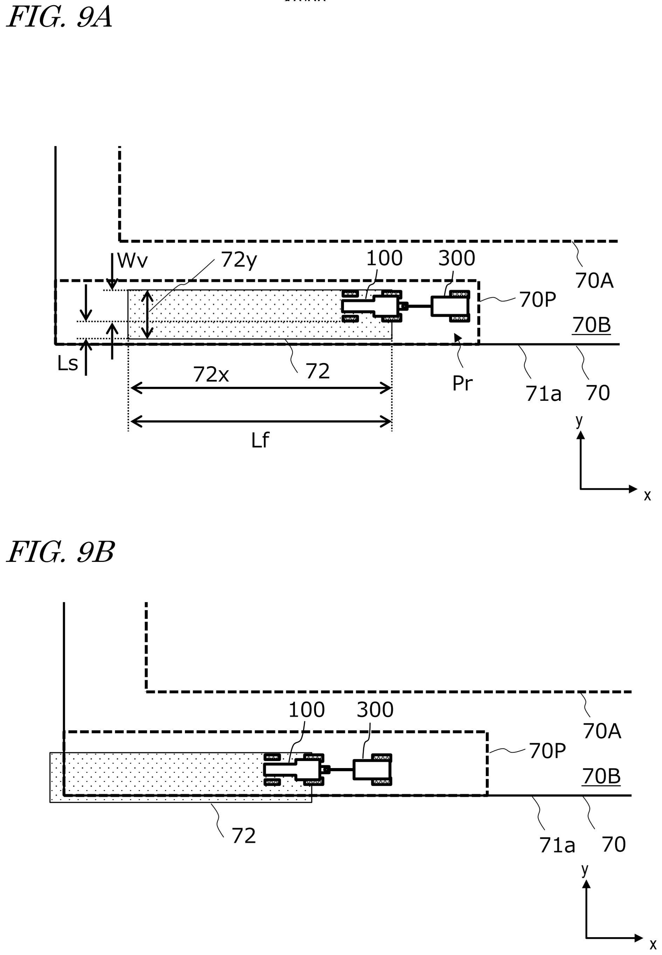

FIG. **9A** and FIG. **9B** are schematic diagrams for describing an example method of determining the temporary stop position **Pr** based on the calculated first space. For example, as shown in FIG. **9A****,** the temporary stop position **Pr** is determined so that a rectangle **72** that is determined by the first length **Lf** and the second length **Ls** is included within the field **70** (i.e., so as not to protrude from the field **70).** In the example of FIG. **9B****,** the rectangle **72** protrudes from the field **70,** thus making it impossible to turn within the field **70.** As shown in FIG. **9A****,** by determining the temporary stop position **Pr** so that the rectangle **72** is included within the field **70,** a space for turning is ensured within the field **70.** The temporary stop position **Pr** can be determined as the position of a reference point on the work vehicle **100.** The reference point on the work vehicle **100** may be, for example, located on the axle of the rear wheels **104R** of the work vehicle **100** and at a midpoint between the right and left rear wheels **104R.** In this example, a length **72x** of the rectangle **72** along the first direction is equal to the first length **Lf.** A length **72y** of the rectangle **72** along the second direction may be a sum of a maximum value **Wv** of width (i.e., length along the right-left direction) of the work vehicle **100** having the implement **300** linked thereto, and the second length **Ls.** The width **Wv** may be determined by whichever length is greater between the width of the implement **300** and the width of the work vehicle **100.** The length **72x** of the rectangle **72** along the first direction and the length **72y** of the rectangle **72** along the second direction may differ depending on the position of the reference point on the work vehicle **100.**

For instance, in the example of FIG. **9A****,** the temporary stop position **Pr** is determined so that the rectangle **72** is included in a predetermined region **70P** within the peripheral region **70B** of the field **70.** The predetermined region **70P** may be in contact with the outer periphery of the field **70,** for example. The predetermined region **70P** may be determined, for example, by a position relationship with a vehicle to supply a material. Information of the predetermined region **70P** is recorded in a storage device that may be internal or external to the work vehicle **100,** for example, and the processor **530** may be configured or programmed to acquire the information of the predetermined region **70P** from the storage device. Alternatively, information of the predetermined region **70P** may be acquired based on a user input.

In the example of FIG. **9A****,** the outer periphery of the field **70** includes a plurality of sides (which in this example is a rectangle including four sides). The temporary stop position **Pr** may be determined so that the temporary stop position **Pr** is located in a vicinity of one **71a** of the plurality of sides of the outer periphery of the field **70** and that the orientation of the work vehicle **100** at the temporary stop position **Pr** is in a direction that is parallel or substantially parallel to the direction in which the side **71a** extends (which in this example is the x direction). Because the work vehicle **100** at the temporary stop position **Pr** is located in a vicinity of side **71a** of the outer periphery of the field **70** and the orientation of the work vehicle **100** at the temporary stop position **Pr** is in a direction that is parallel or substantially parallel to the side **71a,** it may become easier to supply the material. In other words, the work involved in supplying the material can be efficiently performed.

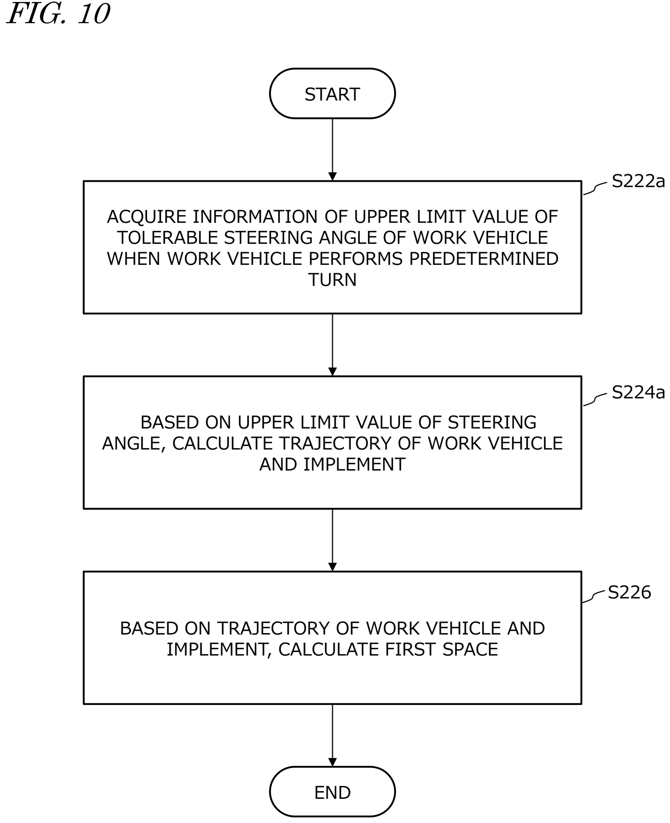

With reference to FIG. **10** to FIG. **13****,** other examples of the calculation method for the trajectory of the work vehicle **100** and the implement **300** will be described. Any two or more of the calculation methods which will be described with reference to FIG. 10 to FIG. **13** and the calculation method which has been described with reference to FIG. 7 can be used in combination.

FIG. **10** is a flowchart showing another example of a process to be performed at step **S200.** The flowchart of FIG. **10** differs from the flowchart of FIG. **7** in that, instead of step **S222** and step **S224,** it includes step **S222a** and step **S224a.**

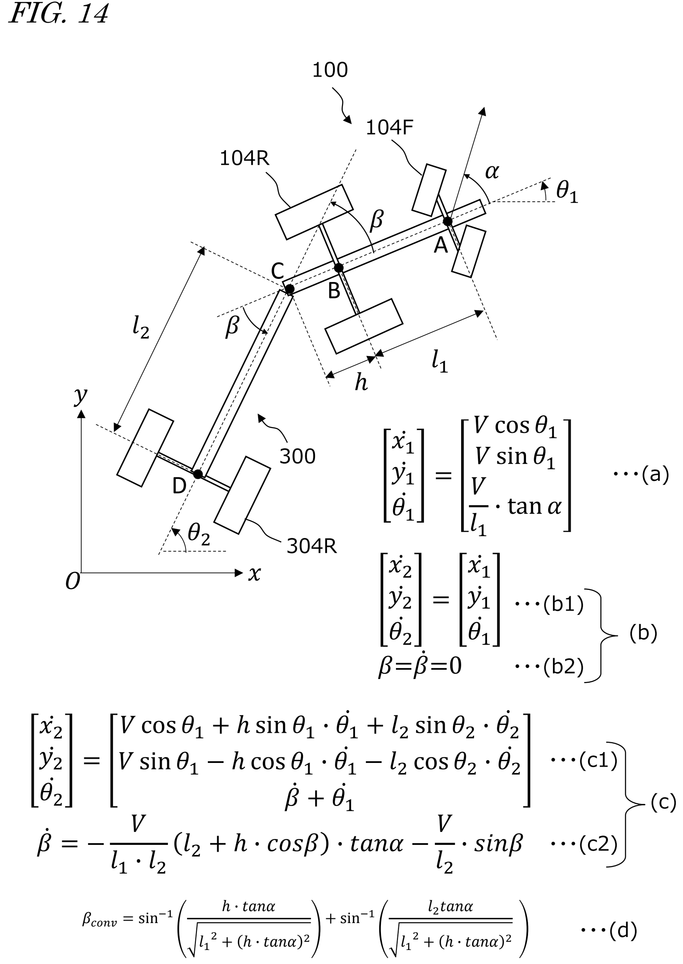

At step **S222a,** information of an upper limit value of steering angle of the work vehicle **100** that is tolerable when the work vehicle **100** performs a predetermined turn is acquired. Information of the upper limit value of the tolerable steering angle may be acquired based on a user input, for example. For instance, the user may set an upper limit value of steering angle that achieves a control of the implement **300** with a predetermined precision or above during a turn. The upper limit value of steering angle that has been input by the user may be compared against a maximum steering angle in a scenario where the work vehicle **100** having the implement **300** linked thereto performs steady-state circular turning (i.e., a steering angle that enables a turning with the smallest turning radius), and whichever one of them is the smaller may be used as the upper limit value of the tolerable steering angle. The maximum steering angle may be determined through a simulation, or determined by using a predetermined relational expression (e.g., equation (d)) in FIG. **14** described below).

As another example, the upper limit value of the tolerable steering angle may be previously set in accordance with the size of the implement **300** or the method of linkage. In such cases, information of the upper limit value of the tolerable steering angle may be recorded in a storage device that may be internal or external to the work vehicle **100** as data that is associated with the type (model) of the implement **300** (e.g., a table). Alternatively, based on terrain data or map data of the field **70,** the upper limit value of the tolerable steering angle may be determined in accordance with the shape of the field **70,** for example. The terrain data or map data of the field **70** is recorded in a storage device that may be internal or external to the work vehicle **100,** for example.

At step **S224a,** based on the upper limit value of steering angle acquired in step **S222a,** a trajectory of the work vehicle **100** and the implement **300** when the work vehicle **100** has performed the predetermined turn is calculated. For example, the trajectory of the work vehicle **100** and the implement **300** may be calculated on the assumption that the steering angle of the work vehicle **100** is fixed to a certain value that is equal to or less than the upper limit value. By calculating the trajectory while setting the upper limit value of the tolerable steering angle, control of the implement **300** can be achieved with a good precision during a turn. In particular, a noticeable effect can be obtained in the case of a towing type implement **300.**

At step **S226,** based on the trajectory calculated in step **S224a,** a first space is calculated. The process of step **S226** may be performed similarly to step **S226** in the flowchart of FIG. **7****.**

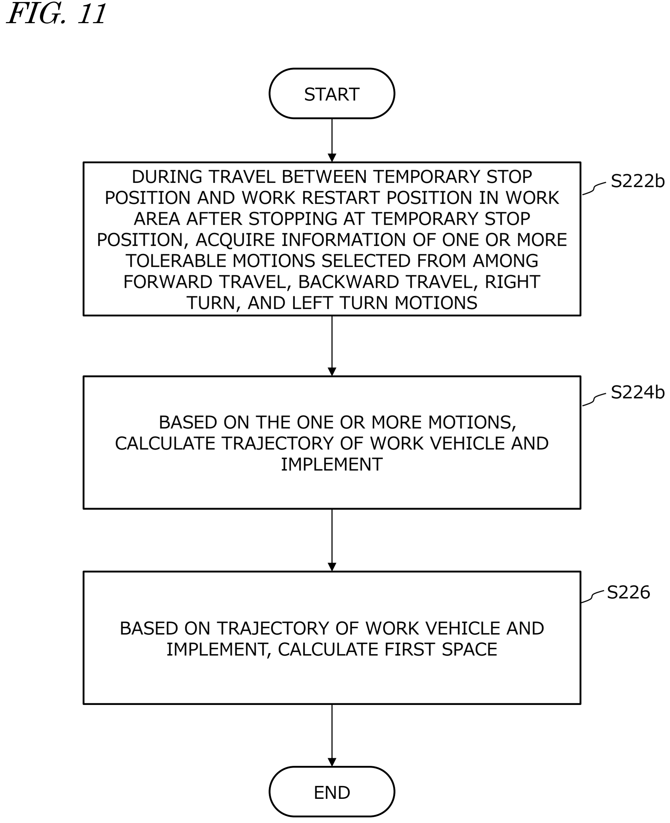

FIG. **11** is a flowchart showing another example of a process to be performed at step **S200.** The flowchart of FIG. **11** differs from the flowchart of FIG. **7** in that, instead of step **S222** and step **S224,** it includes step **S222b** and step **S224b.**

At step **S222b,** during travel of the work vehicle **100** along the connection path **PP3** that connects the temporary stop position **Pr** and the work restart position **3012** in the work area **70A** after stopping at the temporary stop position **Pr,** information of one or more tolerable motions (traveling direction(s)) selected from among forward travel, backward travel, right turn, and left turn motions is acquired. For instance, in the example shown in FIG. **8****,** forward travel and right turn motions are tolerable. Information of tolerable motions may be acquired based on a user input, for example.

At step **S224b,** based on the one or more tolerable motions acquired at step **S222b,** a trajectory of the work vehicle **100** and the implement **300** when the work vehicle **100** has performed the predetermined turn is calculated. In other words, based only on one or more tolerable motions, a trajectory of the work vehicle **100** and the implement **300** in the case of performing a predetermined turn that is defined by the turning direction and the turning angle is calculated. When the implement **300** is linked to the work vehicle **100,** and particularly when the implement **300** is linked to the work vehicle **100** via towing, there may be cases where control of the implement **300** is not easy during backward travel of the work vehicle **100.** By calculating a trajectory of the turn based on a tolerable motion(s), the temporary stop position **Pr** can be determined in such a manner that travel is possible without involving any backward travel before and after the temporary stop position **Pr,** for example. The user can designate a motion(s) (traveling direction(s)) of the work vehicle **100** to be avoided before and after the temporary stop position **Pr.**

At step **S226,** based on the trajectory calculated in step **S224b,** a first space is calculated. The process of step **S226** may be performed similarly to step **S226** in the flowchart of FIG. **7****.**

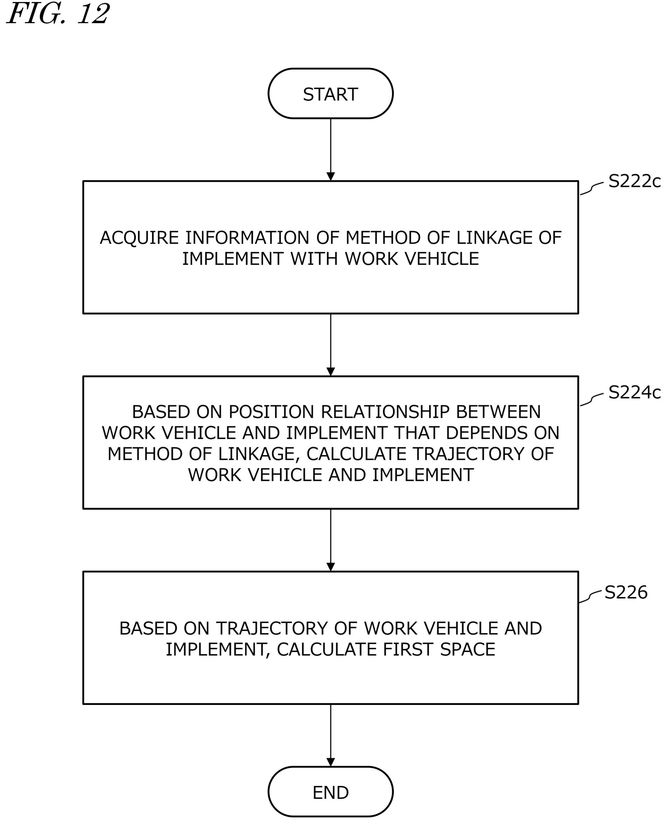

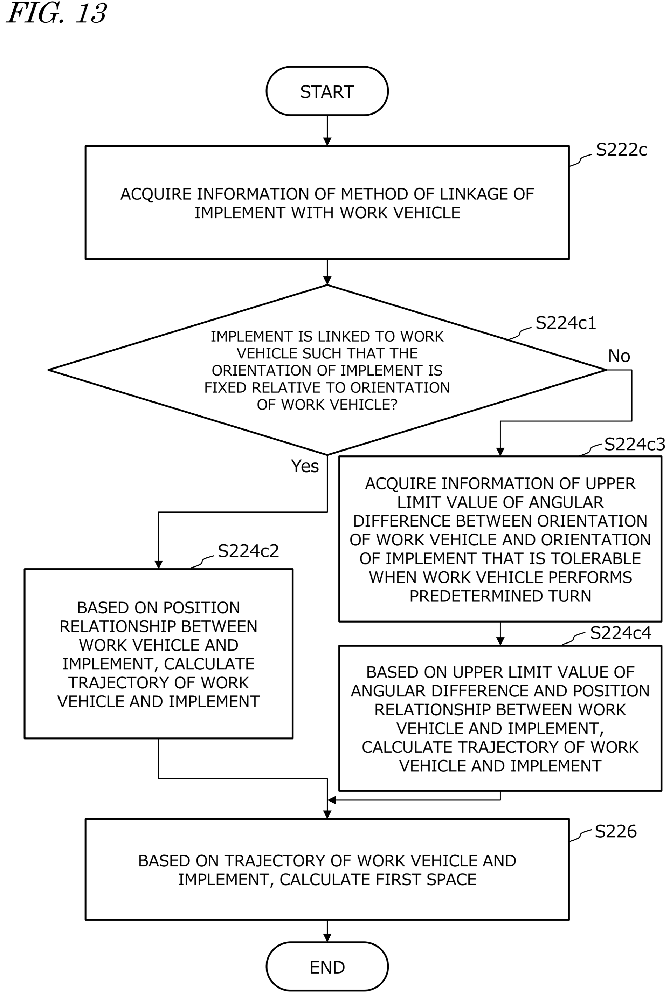

FIG. **12** and FIG. **13** are flowcharts showing other examples of the process to be performed at step **S200.** The flowchart of FIG. **12** differs from the flowchart of FIG. **7** in that, instead of step **S222** and step **S224,** it includes step **S222c** and step **S224c.** The flowchart of FIG. **13** differs from the flowchart of FIG. 12 in that it includes steps **S224c1** to **S224c4** as the process to be performed at step **S224c.**

At step **S222c,** information of the method of linkage of the implement **300** with the work vehicle **100** is acquired. Information of the method of linkage of the implement **300** with the work vehicle **100** includes information as to via direct mounting or via towing, for example. The information of the method of linkage of the implement **300** with the work vehicle **100** may be recorded in a storage device that may be internal or external to the work vehicle **100** as data (e.g., a table) that is associated with the type (model) of the implement **300.**

At step **S224c,** based on the position relationship between the work vehicle **100** and the implement **300** that depends on the method of linkage of the implement **300** with the work vehicle **100** as acquired in step **S222c,** a trajectory of the work vehicle **100** and the implement **300** when the work vehicle 100 has performed the predetermined turn is calculated. Specifically, the processes of steps **S224c1** to **224c4** shown in FIG. **13** are performed, for example.

At step **S224c1,** based on the information acquired in step **S222c,** it is determined whether the method of linkage of the implement **300** with the work vehicle **100** dictates that the implement **300** is linked to the work vehicle **100** such that the orientation of the implement **300** is fixed relative to the orientation of the work vehicle **100.** For example, if the implement **300** is linked to the work vehicle **100** via direct mounting, the orientation of the implement **300** is fixed relative to the orientation of the work vehicle **100,** so control proceeds to "Yes", on the other hand, if the implement **300** is linked to the work vehicle **100** via towing, the orientation of the implement **300** is not fixed relative to the orientation of the work vehicle **100,** so control proceeds to "No".

If step **S224c1** finds "Yes", control proceeds to step **S224c2,** where, based on the position relationship between the work vehicle **100** and the implement **300,** a trajectory of the work vehicle **100** and the implement **300** when the work vehicle **100** has performed the predetermined turn is calculated.

If step **S224c1** finds "No", control proceeds to step **S224c3,** where information of an upper limit value of an angular difference between the orientation of the work vehicle **100** and the orientation of the implement **300** (i.e., angle **β** in FIG. **14** as described below) that is tolerable when the work vehicle **10** performs a predetermined turn is acquired. The angular difference between the orientation of the work vehicle **100** and the orientation of the implement **300** may also be referred to as an "articulation angle". Information of the upper limit value of tolerable articulation angle may be acquired based on a user input, for example. For instance, the user may set an upper limit value of articulation angle that achieves a control of the towing type implement **300** with a predetermined precision or above during a turn. At step **S224c4,** based on the position relationship between the work vehicle **100** and the implement **300** and the upper limit value of the angular difference acquired at step **S224c3,** a trajectory of the work vehicle **100** and the implement **300** when the work vehicle **100** has performed the predetermined turn is calculated.

At step **S226,** based on the trajectory calculated in step **S224c2** or step **S224c4,** a first space is calculated. The process of step **S226** may be performed similarly to step **S226** in the flowchart of FIG. **7****.**

With reference to FIG. **14****,** an example method of calculating a trajectory of the work vehicle **100** and the implement **300** will be described. FIG. **14** is a schematic top view for describing a position relationship between the work vehicle **100** and the implement **300** linked to the work vehicle **100** via towing. Respective symbols in FIG. **14** represent the following.
I₁: distance between the axle of the front wheels **104F** and the axle of the rear wheels **104R** of the work vehicle **100**
I₂: distance between the position at which the work vehicle **100** and the implement **300** are connected and the axle of the rear wheels **304R** of the implement **300**
h: distance between the axle of the rear wheels **104R** of the work vehicle **100** and the position at which the work vehicle **100** and the implement **300** are connected
point A: center of the axle of the front wheels **104F** of the work vehicle **100**
point B: center of the axle of the rear wheels **104R** of the work vehicle **100**
point C: position at which the work vehicle **100** and the implement **300** are connected
point D: center of the axle of the wheels **304R** of the implement **300**
θ₁: orientation of the work vehicle **100**
θ₂:orientation of the implement **300**
α: steering angle (rad)
β: angular difference (articulation angle) between the orientation of the work vehicle **100** and the orientation of the implement **300** (rad)
x coordinate and y coordinate of point B will be designated as (x₁, y₁), and x coordinate and y coordinate of point D as (x₂, y₂), respectively.

For example, in the calculation of the trajectory of the work vehicle **100** and the implement **300,** equation (a) to equation (c) can be used. Equation (a) to equation (c) are equations relating to motions of the work vehicle **100** and the implement **300** during forward travel at an extremely low constant speed V(m/s), given a fixed value of steering angle α. Equation (a) is an equation relating to a motion of the work vehicle **100.** Equation (b), which includes equation (b1) and equation (b2), is an equation relating to a motion of the implement **300** being linked to the work vehicle **100** via direct mounting. Equation (c), which includes equation (c1) and equation (c2), is an equation relating to a motion of the implement **300** being linked to the work vehicle **100** via towing. An extremely low speed corresponds to a vehicle speed at which sideways skid is negligible. When determining the trajectory of the work vehicle **100** and the implement **300** by using equation (a) to equation (c), the vehicle speed of the work vehicle **100** is preferably, e.g., about 0.5 m/s (e.g., about 0.5 meters per second) or less, and more preferably about 0.2 m/s (e.g., about 0.2 meters per second)) or less. Details of equation (a) to equation (c) are described in Ryo Torisu et al., "Fundamental Equations Describing the Motion of Coupled Vehicles at Extremely Low Speeds," Journal of the Society of Agricultural Machinery, 52(5), pages 27 to 34 (1990).

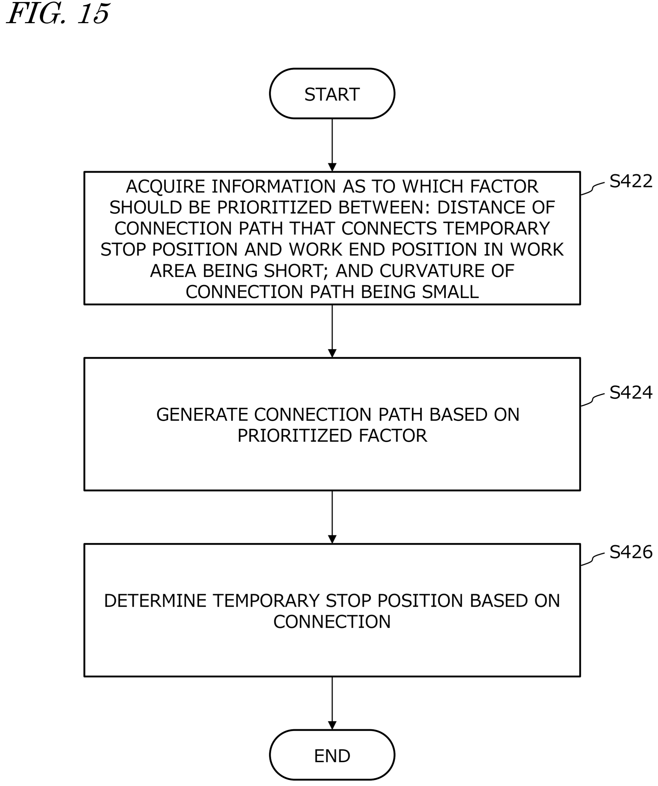

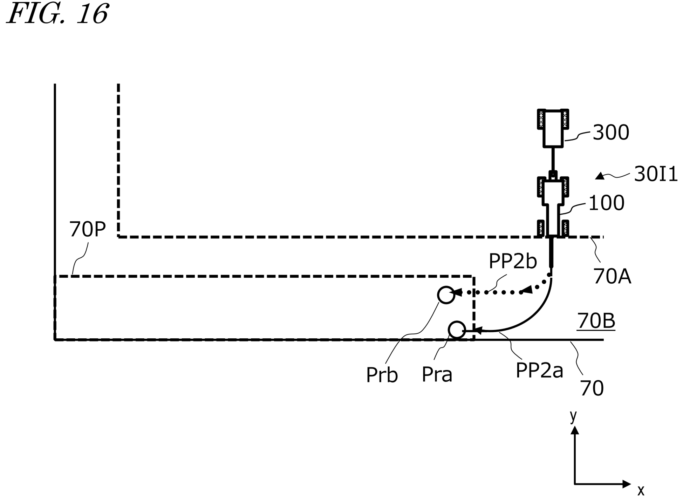

With reference to FIG. **15** and FIG. **16****,** an example of a process (determination of a temporary stop position) that may be performed at step **S400** will be described. FIG. **15** is a flowchart showing an example of a process to be performed at step **S400.** As described above, at step **S400,** based on the first space calculated in step **S200,** a temporary stop position **Pr** is determined. FIG. **16** is a schematic diagram for describing an example method of determining the temporary stop position **Pr.**

As shown in FIG. **16****,** a plurality of alternatives may exist for the temporary stop position **Pr.** In the example of FIG. **16****,** position **Pra** and position **Prb** are shown as candidates of temporary stop positions **Pr.** It is assumed that each of position **Pra** and position **Prb** can be derived based on the first space calculated in step **S200.** In other words, regardless of whether position **Pra** or position **Prb** is the temporary stop position, a space for turning is ensured (i.e., in the illustrated example, a rectangle that is determined by the first length **Lf** and the second length **Ls** will fit within the predetermined region **70P** of the field **70).** Let path **PP2a** and path **PP2b,** respectively, be designated as candidates of connection paths **PP2** corresponding to candidates of temporary stop positions **Pr** (i.e., position **Pra** and position **Prb).** Although two positions **Pra** and **Prb** are depicted as candidates of temporary stop positions **Pr** for simplicity, there may be three or more candidates of temporary stop positions **Pr** and their corresponding paths. Candidates of temporary stop positions **Pr** are not limited to being a plurality of discrete points, and such positions may be contiguously present within a region having a finite area.

As shown in FIG. **15****,** at step **S400,** the processes of steps **S422, S424** and **S426** may be performed.

At step **S422,** information is acquired as to which factor should be prioritized between the distance of the connection path **PP2** (that connects the temporary stop position **Pr** and the work end position **3011** in the work area **70A** before stopping at the temporary stop position **Pr)** being short, and the curvature of the connection path **PP2** being small. The user may make an input indicating which factor should be prioritized, and based on the user input, information of the prioritized factor may be acquired. Alternatively, based on terrain data or map data of the field **70,** information of the prioritized factor may be acquired.

At step **S424,** based on the prioritized factor acquired in step **S422,** the connection path **PP2** is generated. For instance, in the example of FIG. **16****,** the connection path **PP2b** is generated if the connection path **PP2** being short is prioritized, and the connection path **PP2a** is generated if the curvature of the connection path **PP2** being small is prioritized.

At step **S426,** based on the connection path **PP2** generated in step **S424,** the temporary stop position **Pr** is determined. For instance, in the example of FIG. **16****,** if the connection path **PP2b** is generated, then a temporary stop position **Prb** is generated, and if the connection path **PP2a** is generated, then a temporary stop position **Pra** is determined. Thus, based on the prioritized factor that is set by the user, for example, the temporary stop position **Pr** can be selected from among the plurality of alternatives. If the connection path **PP2** being short is prioritized, the travel time of the work vehicle **100** can be shortened. If the curvature of the connection path **PP2** being small is prioritized, it is possible to restrain the ground surface of the field **70** from becoming rough due to travel of the work vehicle **100,** thus suppressing impact on the ground surface of the field 70.

In a case where a plurality of alternatives exist for the temporary stop position **Pr,** a temporary stop position **Pr** may be determined based on information as to which factor should be prioritized between the distance of the connection path **PP3** (that connects the temporary stop position **Pr** and the work restart position **3012** in the work area **70A** after stopping at the temporary stop position **Pr)** being short, and the curvature of the connection path **PP3** being small.

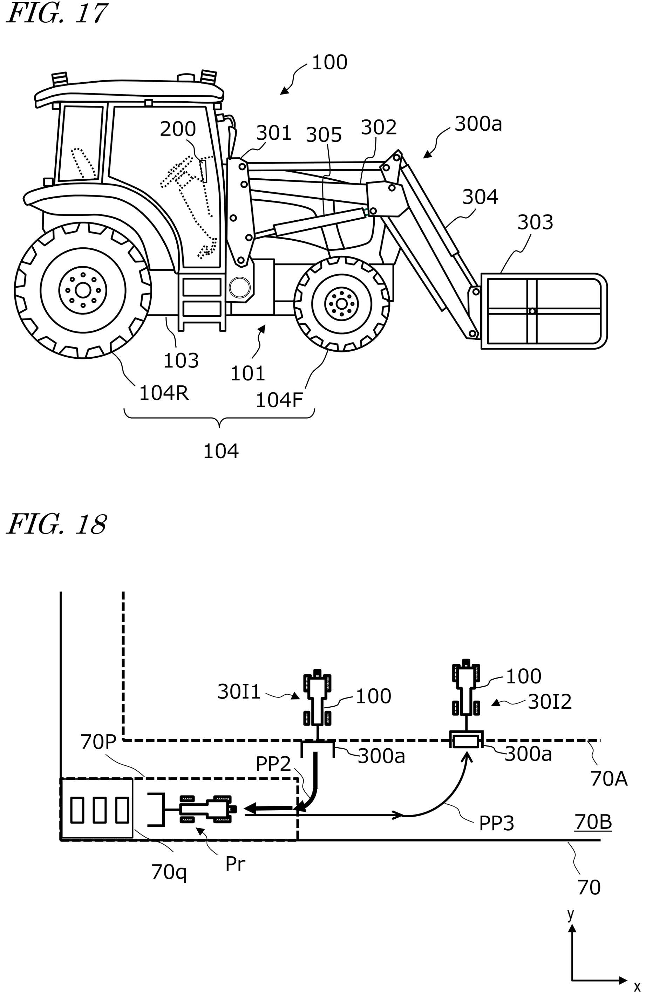

FIG. **17** is a schematic side view of a work vehicle **100** having another implement **300a** linked thereto. To the work vehicle **100** shown in FIG. **17****,** a front loader **300a** is linked as an implement to the front of the work vehicle **100.** The front loader **300a** is linked to the work vehicle **100** via direct mounting.

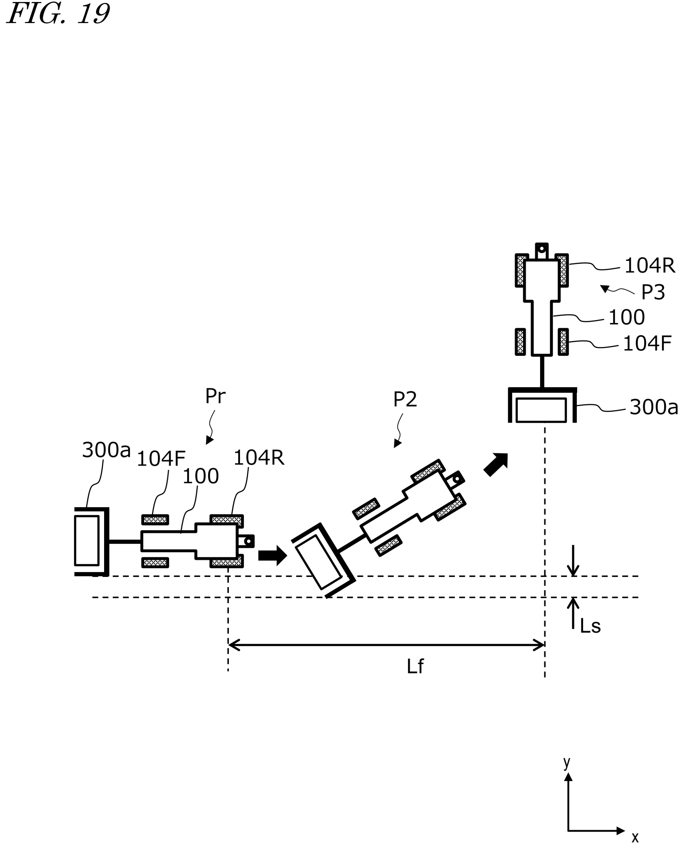

With reference to FIG. **18** and FIG. **19****,** an example method of calculating a first space in the example of FIG. **17** will be described. FIG. **18** and FIG. **19** are schematic diagrams for describing an example calculation method of a first space. FIG. **18** illustrates the work vehicle **100** with the implement **300a** linked thereto being located at a work end position **3011** in a work area **70A** before stopping at a temporary stop position **Pr,** the work vehicle **100** being located at the temporary stop position **Pr,** and the work vehicle **100** being located at a work restart position **3012** in the work area **70A** after stopping at the temporary stop position **Pr.** In this example, a material storage area **70q** is provided in a predetermined region **70P** of the within the field **70,** at which the material to be carried by the implement **300a** is to be supplied. In a connection path **PP2** from the work end position **3011** to the temporary stop position **Pr,** the traveling direction of the work vehicle **100** includes forward travel and a right turn. On the other hand, in a connection path **PP3** from the temporary stop position **Pr** to the work restart position **3012,** the traveling direction (motion) of the work vehicle **100** includes backward travel.

As shown in FIG. **19****,** in the example of FIG. **18****,** too, the first space can be calculated by determining a first length **Lf** and a second length **Ls** of a trajectory of the work vehicle **100** and the implement **300** when the work vehicle **100** has performed the predetermined turn, similarly to the example of FIG. 8. The example of FIG. **19** illustrates how the work vehicle **100** may perform backward travel from the temporary stop position **Pr,** through position **P2,** and to position **P3,** while turning. It is assumed that the work vehicle **100** completes the turn at position P3. In the example of FIG. **19****,** the orientation of the work vehicle **100** before the turn (i.e., the orientation of the work vehicle **100** at the temporary stop position Pr) is the -x direction in the figure, the orientation of the work vehicle **100** after the turn (i.e., the orientation of the work vehicle **100** at position **P1)** is the -y direction in the figure, the turning direction is counterclockwise, and the turning angle is 90°.

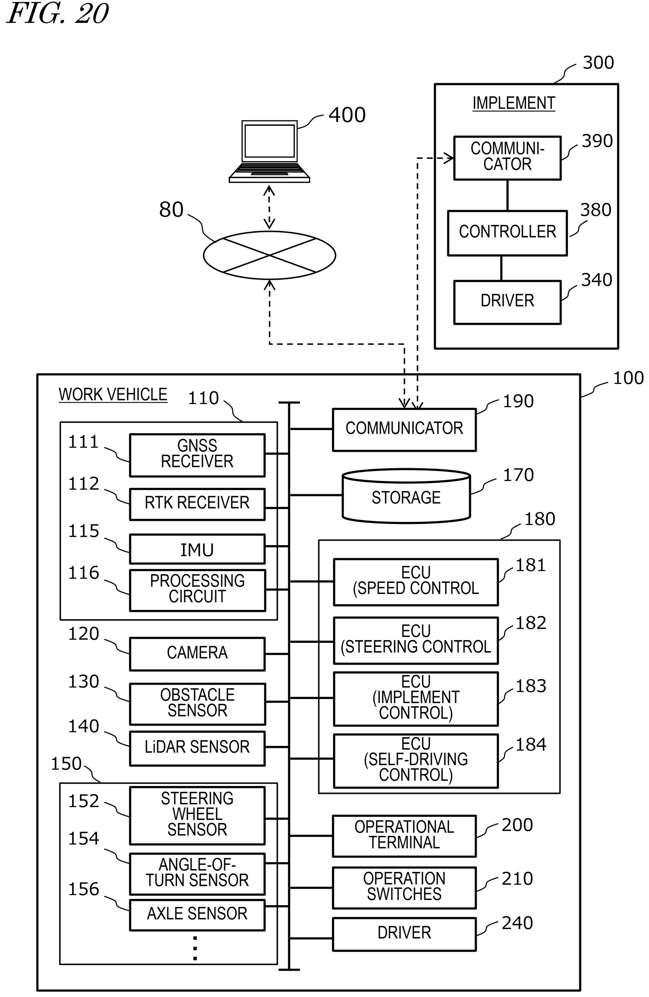

FIG. **20** is a block diagram schematically showing an example configuration for the work vehicle **100** and the implement **300.** With reference also to FIG. **1****,** the configuration of the work vehicle **100** and the implement **300** will be described. As for the work vehicle **100** having the front loader **300a** linked thereto, shown in FIG. **17****,** description will be omitted with respect to any aspects that are common to the example of FIG. **1****.**

As shown in in FIG. **1** and FIG. **20****,** the work vehicle **100** includes a positioning device **110** to output position data concerning the position of the work vehicle **100** (e.g., a GNSS unit), a sensor group **150** to detect the state of the work vehicle **100** and output sensor data, and a controller **180** to control the operation of the work vehicle **100.** The sensor group **150** includes one or more sensors.

The work vehicle **100** may further include a plurality of external sensors to sense the surroundings of the work vehicle **100.** An "external sensor" is a sensor that senses the external state of the work vehicle. In the example of FIG. 1, the external sensors include a plurality of LiDAR sensors **140,** a plurality of cameras **120,** and a plurality of obstacle sensors **130.**

In addition to the positioning device **110,** the cameras **120,** the obstacle sensors **130,** the LiDAR sensors **140,** the sensor group **150,** a storage device **170,** the controller **180,** and an operation terminal **200,** the work vehicle **100** in the example of FIG. **20** also includes a communicator **190,** operation switches **210,** and a driver **240** (which may be referred to as a "first driver"). These component elements are communicably connected to one another via a bus.

As shown in FIG. 1, the work vehicle **100** includes a vehicle body **101,** a prime mover (engine) **102,** and a transmission **103.** On the vehicle body **101,** travel device, which includes wheels **104** with tires, and a cabin **105** are provided. The travel device includes four wheels **104,** and axles to cause the four wheels to rotate, and braking device (brakes) to brake on each axle. The wheels **104** include a pair of front wheels **104F** and a pair of rear wheels **104R.** Inside the cabin **105,** a driver's seat **107,** a steering device **106,** an operation terminal **200,** and switches for manipulation are provided. The front wheels **104F** and/or the rear wheels **104R** may be replaced by a plurality of wheels with a track (crawlers), rather than wheels with tires, attached thereto.

The prime mover **102** may be a diesel engine, for example. Instead of a diesel engine, an electric motor may be used. The transmission **103** can change the propulsion and the moving speed of the work vehicle **100** through a speed changing mechanism. The transmission **103** can also switch between forward travel and backward travel of the work vehicle **100.**

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as "steering angle") can cause a change in the traveling direction of the work vehicle **100.** The steering angle of the front wheels **104F** can be changed by manipulating the steering wheel. The power steering device includes a hydraulic device or an electric motor to supply an assisting force for changing the steering angle of the front wheels **104F.** When automatic steering is performed, under the control of the controller included in the work vehicle **100,** the steering angle may be automatically adjusted by the power of the hydraulic device or the electric motor.

A linkage device **108** is provided at the rear of the vehicle body **101.** The linkage device **108** includes, e.g., a three-point linkage (also referred to as a "three-point hitch" or a "three-point link"), a PTO (Power Take Off) shaft, a universal joint, and a communication cable. The linkage device **108** allows the implement **300** to be attached to, or detached from, the work vehicle **100.** The linkage device **108** is able to raise or lower the three-point hitch with a hydraulic device, for example, thus changing the position or attitude of the implement **300.** Moreover, motive power can be sent from the work vehicle **100** to the implement **300** via the universal joint. While towing the implement **300,** the work vehicle **100** allows the implement **300** to perform a predetermined task. The linkage device may be provided at the front portion of the vehicle body **101.** In that case, the implement can be connected at the front portion of the work vehicle **100.**

Although the implement **300** shown in FIG. **1** is a sprayer to spray a chemical agent onto a crop, the implement **300** is not limited to a sprayer. For example, any arbitrary task device such as a mower, a seeder, a spreader, a rake, a baler, a harvester, a plow, a harrow, or a rotary tiller may be connected to the work vehicle **100** for use.

The front loader **300a** shown in FIG. **17****,** as an example implement, includes a support frame **301,** a boom **302,** a front attachment (which in this example is a bale grab) **303,** a cylinder **304,** and boom cylinders **305.** The support frame **301** is fixed to the frame of the vehicle body **101.** The boom **302** has an arm structure, and is rotatably supported by the support frame **301** so as to extend frontward and above from the vehicle. The front attachment **303** is rotatably supported by an end of the boom **302.** The front loader **300a** is linked to the vehicle body **101** via a hydraulic coupler and a power connector. The front loader **300a** includes a hydraulic system including hydraulic valves, and operates under hydraulic control. Specifically, by extending or retracting the boom cylinders **305** via hydraulic action, the boom **302** can be rotated around a rotation axis that is located at the boom fulcrum. As a result, the front loader **300a** (or the front attachment **303)** can be raised or lowered.

Referring back to FIG. 1, the positioning device **110** receives satellite signals (also referred to as GNSS signals) that are transmitted from a plurality of GNSS satellites, and performs positioning based on the satellite signals. GNSS is a collective term for satellite positioning systems such as the GPS (Global Positioning System), QZSS (Quasi-Zenith Satellite System, e.g., MICHIBIKI), GLONASS, Galileo, and BeiDou. Although the positioning device 110 in the present example embodiment is located above the cabin **105,** it may be located at any other position.

As shown in FIG. **20****,** the positioning device **110** includes a GNSS receiver **111,** an RTK receiver **112,** and a processing circuit **116.** The positioning device **110** may further include an inertial measurement unit (IMU) **115.**

The GNSS receiver **111** includes an antenna to receive signals from the GNSS satellites, and a processing circuit to determine the position of the work vehicle 100 based on the signals received by the antenna. The GNSS receiver **111** in the GNSS unit **110** receives satellite signals transmitted from the plurality of GNSS satellites and generates GNSS data based on the satellite signals. The GNSS data is generated in a predetermined format such as, for example, the NMEA-0183 format. The GNSS data may include, for example, the ID number, the angle of elevation, the azimuth angle, and a value representing the reception intensity of each of the satellites from which the satellite signals are received.

The positioning device **110** may perform positioning of the work vehicle **100** by utilizing an RTK (Real Time Kinematic)-GNSS. In the positioning based on the RTK-GNSS, not only satellite signals transmitted from a plurality of GNSS satellites, but also a correction signal that is transmitted from a reference station is used. The reference station may be located in a vicinity of work area where the work vehicle **100** performs tasked travel (e.g., at a position within about 10 km of the work vehicle **100).** The reference station generates a correction signal of, for example, an RTCM format based on the satellite signals received from the plurality of GNSS satellites, and transmits the correction signal to the positioning device **110.** The RTK receiver **112,** which includes an antenna and a modem, receives the correction signal transmitted from the reference station. Based on the correction signal, the processing circuit **116** of the positioning device **110** corrects the results of the positioning performed by the GNSS receiver **111.** Use of the RTK-GNSS enables positioning with an accuracy on the order of several centimeters of errors, for example. Positional information including latitude, longitude, and altitude information is acquired through the highly accurate positioning by the RTK-GNSS. The positioning device **110** calculates the position of the work vehicle **100** as frequently as, for example, one to ten times per second. Note that the positioning method is not limited to being performed by using an RTK-GNSS, any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System).

The positioning device **110** according to the present example embodiment may further include the IMU **115.** With the inclusion of the IMU **115,** the positioning device **110** can complement position data by utilizing signals from the IMU **115.** The data acquired by the IMU **115** can be used to complement the position data based on the satellite signals, so as to improve the performance of positioning.

The IMU **115** may include a 3-axis accelerometer and a 3-axis gyroscope. The IMU **115** may include a direction sensor such as a 3-axis geomagnetic sensor. The IMU **115** functions as a motion sensor which can output signals representing parameters such as acceleration, velocity, displacement, and attitude of the work vehicle **100.** Based not only on the satellite signals and the correction signal but also on a signal that is output from the IMU **115,** the processing circuit **116** can estimate the position and orientation of the work vehicle **100** with a higher accuracy. The signal that is output from the IMU **115** may be used for the correction or complementation of the position that is calculated based on the satellite signals and the correction signal. The IMU **115** outputs a signal more frequently than the GNSS receiver **111.** For example, the IMU **115** outputs a signal as frequently as approximately several ten times to several thousand times per second. Utilizing this signal that is output highly frequently, the processing circuit **116** allows the position and orientation of the work vehicle **100** to be measured more frequently (e.g., about 10 Hz or above). Instead of the IMU **115,** a 3-axis accelerometer and a 3-axis gyroscope may be separately provided. The IMU **115** may be provided as a separate device from the positioning device **110.**

The sensor group **150** may include various sensors to detect the state of the work vehicle **100** or the implement **300** (i.e., internal sensors). For example, the sensor group **150** may include a steering wheel sensor **152,** an angle-of-turn sensor **154,** and an axle sensor **156.**

The steering wheel sensor **152** measures the angle of rotation of the steering wheel of the work vehicle **100.** The angle-of-turn sensor **154** measures the angle of turn of the front wheels **104F,** which are the wheels responsible for steering. Measurement values by the steering wheel sensor **152** and the angle-of-turn sensor **154** may be used for steering control by the controller **180.**

The axle sensor **156** measures the rotational speed, i.e., the number of revolutions per unit time, of an axle that is connected to the wheels **104.** The axle sensor **156** may be a sensor including a magnetoresistive element (MR), a Hall generator, or an electromagnetic pickup, for example. The axle sensor **156** outputs a numerical value indicating the number of revolutions per minute (unit: rpm) of the axle, for example. The axle sensor **156** is used to measure the speed of the work vehicle **100.** Measurement values from the axle sensor **156** can be utilized for the speed control by the controller **180.**

The storage device **170** includes one or more storage media such as a flash memory or a magnetic disc. The storage device **170** stores various data that is generated by the positioning device **110,** the cameras **120,** the obstacle sensors **130,** the LiDAR sensors **140,** the sensor group 150, and the controller **180.** The data that is stored by the storage device **170** may include an environment map of the environment where the work vehicle **100** travels, an obstacle map that is consecutively generated during travel, and path data for self-driving. The storage device **170** also stores a computer program(s) to cause each of the ECUs in the controller **180** to perform various operations described below. Such a computer program(s) may be provided to the work vehicle **100** via a storage medium (e.g., a semiconductor memory, an optical disc, etc.) or through telecommunication lines (e.g., the Internet). Such a computer program(s) may be marketed as commercial software.

The controller **180** includes the plurality of ECUs. The plurality of ECUs include, for example, the ECU **181** for speed control, the ECU **182** for steering control, the ECU **183** for implement control, and the ECU **184** for self-driving control.

The ECU **181** is configured or programmed to control the prime mover **102,** the transmission **103,** and brakes included in the driver **240,** thus controlling the speed of the work vehicle **100.**

The ECU **182** is configured or programmed to control the hydraulic device or the electric motor included in the steering device **106** based on a measurement value of the steering wheel sensor **152,** thus controlling the steering of the work vehicle **100.**

In order to cause the implement **300** to perform a desired operation, the ECU **183** is configured or programmed to control the operations of the three-point hitch, the PTO shaft, and the like that are included in the linkage device **108.** Also, the ECU **183** is configured or programmed to generate a signal to control the operation of the implement **300,** and transmit this signal from the communicator **190** to the implement **300.**

Based on data output from the positioning device **110,** the cameras **120,** the obstacle sensors **130,** the LiDAR sensors **140,** and the sensor group **150,** the ECU **184** is configured or programmed to perform computation and control for achieving self-driving. For example, the ECU **184** is configured or programmed to estimate the position of the work vehicle **100** based on the data output from at least one of the positioning device **110,** the cameras **120,** and the LiDAR sensors **140.** In a situation where a sufficiently high reception intensity exists for the satellite signals from the GNSS satellites, the ECU **184** may determine the position of the work vehicle **100** based only on the data output from the positioning device **110.** On the other hand, in an environment where obstructions, such as trees, that may hinder reception of the satellite signals exist around the work vehicle **100,** e.g., an orchard, the ECU **184** estimates the position of the work vehicle **100** by using the data output from the LiDAR sensors **140** or the cameras **120.** During self-driving, the ECU **184** performs computation necessary for the work vehicle **100** to travel along a target path, based on the estimated position of the work vehicle **100.** The ECU **184** is configured or programmed to send the ECU **181** a command to change the speed, and sends the ECU **182** a command to change the steering angle. In response to the command to change the speed, the ECU **181** is configured or programmed to control the prime mover **102,** the transmission **103,** or the brakes to change the speed of the work vehicle **100.** In response to the command to change the steering angle, the ECU **182** is configured or programmed to control the steering device **106** to change the steering angle.

Through the actions of these ECUs, the controller **180** is configured or programmed to realize self-traveling. During self-traveling, the controller **180** is configured or programmed to control the driver **240** based on the measured or estimated position of the work vehicle **100** and on the consecutively-generated target path. As a result, the controller **180** can cause the work vehicle **100** to travel along the target path.

The plurality of ECUs included in the controller **180** can communicate with one another in accordance with a vehicle bus standard such as, for example, a CAN (Controller Area Network). Instead of a CAN, faster communication methods such as Automotive Ethernet (registered trademark) may be used. Although the ECUs **181** to **184** are illustrated as individual blocks in FIG. **20****,** the function of each of the ECU **181** to **184** may be implemented by a plurality of ECUs. Alternatively, an onboard computer that integrates the functions of at least some of the ECUs **181** to **184** may be provided. The controller **180** may include ECUs other than the ECUs **181** to **184,** and any number of ECUs may be provided in accordance with functionality. Each ECU includes a processing circuit including one or more processors.

The cameras **120** may be provided at the front/rear/right/left of the work vehicle **100,** for example. The cameras **120** image the surrounding environment of the work vehicle **100** and generate image data. The images acquired with the cameras **120** may be transmitted to the terminal device, which is responsible for remote monitoring, for example. The images may be used to monitor the work vehicle **100** during unmanned driving. The cameras **120** may be provided according to the needs, and any number of them may be provided.

The LiDAR sensors **140** are one example of external sensors that output sensor data indicating a distribution of geographic features around the work vehicle **100.** In the example of FIG. 1, two LiDAR sensors **140** are disposed on the cabin **105,** at the front and the rear. The LiDAR sensors **140** may be provided at other positions (e.g., on a lower portion of a front face of the vehicle body **101).** While the work vehicle **100** is traveling, each LiDAR sensor **140** repeatedly outputs sensor data representing the distances and directions of measurement points on objects existing in the surrounding environment, or two-dimensional or three-dimensional coordinate values of such measurement points. The number of LiDAR sensors **140** is not limited to two, but may be one, or three or more.

The LiDAR sensors **140** may be configured to output two-dimensional or three-dimensional point cloud data as sensor data. In the present specification, "point cloud data" broadly means data indicating a distribution of multiple reflection points that are observed with the LiDAR sensors **140.** The point cloud data may contain coordinate values of each reflection point in a two-dimensional space or a three-dimensional space or information indicating the distance and direction of each reflection point, for example. The point cloud data may include information of luminance of each reflection point. The LiDAR sensors **140** may be configured to repeatedly output point cloud data with a predesignated cycle, for example. Thus, the external sensors may include one or more LiDAR sensors **140** that output point cloud data as sensor data.

The sensor data that is output from the LiDAR sensors **140** is processed by a controller configured or programmed to control self-traveling of the work vehicle **100.** During travel of the work vehicle **100,** based on the sensor data that is output from the LiDAR sensors **140,** the controller can be configured or programmed to consecutively generate an obstacle map indicating a distribution of objects existing around the work vehicle **100.** The controller may be configured or programmed to generate an environment map by joining together obstacle maps with the use of an algorithm such as SLAM, for example, during self-traveling. The controller can be configured or programmed to perform estimation of the position and orientation of the work vehicle **100** (i.e., localization) by matching the sensor data against the environment map.

The plurality of obstacle sensors **130** shown in FIG. **1** are provided at the front and the rear of the cabin **105.** The obstacle sensors **130** may be provided at other positions. For example, one or more obstacle sensors **130** may be provided at any position at the sides, the front, or the rear of the vehicle body **101.** The obstacle sensors **130** may include, for example, laser scanners or ultrasonic sonars. The obstacle sensors **130** may be used to detect obstacles in the surroundings during self-traveling to cause the work vehicle **100** to halt or detour around the obstacles.

The controller of the work vehicle **100** may be configured or programmed to utilize, to position, the sensor data acquired with the sensing devices such as the cameras **120** or the LIDAR sensors **140,** in addition to the results of positioning provided by the positioning device **110.** In the case where geographic features serving as characteristic points exist in the environment that is traveled by the work vehicle **100,** as in the case of an agricultural road, a forest road, a general road, or an orchard, the position and the orientation of the work vehicle **100** can be estimated with a high accuracy based on data that is acquired with the cameras **120** or the LiDAR sensors **140** and on an environment map that is previously stored in the storage device. By correcting or complementing position data based on the satellite signals using the data acquired with the cameras **120** or the LiDAR sensors **140,** it becomes possible to identify the position of the work vehicle **100** with a higher accuracy.

The work vehicle **100** and the implement **300** can communicate with each other via a communication cable that is included in the linkage device **108.** The work vehicle **100** is able to communicate with a terminal device **400** for remote monitoring via a network **80.** The terminal device **400** may be any arbitrary computer, e.g., a personal computer (PC), a laptop computer, a tablet computer, or a smartphone, for example.

The implement **300** includes a driver **340** (which may be referred to as the "second driver"), a driver **340,** a controller **380,** and a communicator **390.** Note that FIG. **20** shows component elements which are relatively closely related to the operations of self-driving by the work vehicle **100,** while other components are omitted from illustration.

The cameras **120** are imagers that image the surrounding environment of the work vehicle **100.** Each camera **120** includes an image sensor such as a CCD (Charge Coupled Device) or a CMOS (Complementary Metal Oxide Semiconductor), for example. In addition, each camera **120** may include an optical system including one or more lenses and a signal processing circuit. During travel of the work vehicle **100,** the cameras **120** image the surrounding environment of the work vehicle **100,** and generate image (e.g., motion picture) data. The cameras **120** are able to capture motion pictures at a frame rate of 3 frames/second (fps: frames per second) or greater, for example. The images generated by the cameras **120** may be used by a remote supervisor to check the surrounding environment of the work vehicle **100** with the terminal device **400,** for example. The images generated by the cameras **120** may also be used for the purpose of positioning or detection of obstacles. As shown in FIG. **1****,** the plurality of cameras **120** may be provided at different positions on the work vehicle **100,** or a single camera **120** may be provided. A visible camera(s) to generate visible images and an infrared camera(s) to generate infrared images may be separately provided. Both of a visible camera(s) and an infrared camera(s) may be provided as a camera(s) for generating images for monitoring purposes. The infrared camera(s) may also be used for detection of obstacles at nighttime.

An obstacle sensor **130** detects objects around the work vehicle **100.** The obstacle sensor **130** may include a laser scanner or an ultrasonic sonar, for example. When an object exists at a position closer to the obstacle sensor **130** than a predetermined distance, the obstacle sensor **130** outputs a signal indicating the presence of an obstacle. A plurality of obstacle sensors **130** may be provided at different positions of the work vehicle **100.** For example, a plurality of laser scanners and a plurality of ultrasonic sonars may be located at different positions of the work vehicle **100.** Providing a multitude of obstacle sensors **130** can reduce blind spots in monitoring obstacles around the work vehicle **100.**

The driver **240** includes various types of devices required to cause the work vehicle **100** to travel and to drive the implement **300,** for example, the prime mover **102,** the transmission **103,** the steering device **106,** the linkage device **108** and the like described above. The prime mover **102** may include an internal combustion engine such as, for example, a diesel engine. The driver **240** may include an electric motor for traction instead of, or in addition to, the internal combustion engine.

The communicator **190** is a device including a circuit to communicate with the implement **300** and the terminal device **400.** The communicator **190** includes circuitry to perform exchanges of signals complying with an ISOBUS standard such as ISOBUS-TIM, for example, between itself and the communicator **390** of the implement **300.** This allows the implement **300** to perform a desired operation, or allows information to be acquired from the implement **300.** The communicator **190** may further include an antenna and a communication circuit to exchange signals via the network **80** with the terminal device 400. The network **80** may include a 3G, 4G, 5G, or any other cellular mobile communications network and the Internet, for example. The communicator **190** may be configured or programmed to communicate with a mobile terminal that is used by a supervisor who is situated in a vicinity of work vehicle **100.** With such a mobile terminal, communication may be performed based on any arbitrary wireless communication standard, e.g., Wi-Fi (registered trademark), 3G, 4G, 5G or any other cellular mobile communication standard, or Bluetooth (registered trademark).

The operation terminal **200** is a terminal for the user to perform a manipulation related to the travel of the work vehicle **100** and the operation of the implement **300,** and is also referred to as a virtual terminal (VT). The operation terminal **200** may include a display device such as a touch screen panel, and/or one or more buttons. The display device may be a display such as a liquid crystal display or an organic light-emitting diode (OLED) display, for example. By manipulating the operation terminal **200,** the user can perform various manipulations, such as, for example, switching ON/OFF the self-driving mode, switching ON/OFF a recording (teaching) mode and a reproducing (playback) mode, and switching ON/OFF the implement **300.** At least some of these manipulations may also be realized by manipulating the operation switches **210.** The operation terminal **200** may be configured so as to be detachable from the work vehicle **100.** A user who is at a remote place from the work vehicle **100** may manipulate the detached operation terminal **200** to control the operation of the work vehicle **100.** The operation terminal **200** may include a storage device. In place of the storage device **170,** the storage device in the operation terminal **200** may store various data that is necessary for the operation of the work vehicle **100.** The driver **340** in the implement **300** shown in FIG. **20** performs necessary operations for the implement **300** to perform predetermined tasks. The driver **340** includes a device that is adapted to the use of the implement **300,** e.g., a hydraulic device, an electric motor, or a pump. The controller **380** is configured or programmed to control the operation of the driver **340.** In response to signals that are transmitted from the work vehicle **100** via the communicator **390,** the controller **380** is configured or programmed to cause the driver **340** to perform various operations. Moreover, a signal that is in accordance with the state of the implement **300** may be transmitted from the communicator **390** to the work vehicle **100.**

Path generation methods according to example embodiments of the present invention is broadly applicable to various kinds of work vehicles for use in smart agriculture. With path generation methods and travel control systems according to example embodiments of the present invention, it is possible to achieve a more efficient travel of a work vehicle having an implement linked thereto within a field.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A method, to be executed by one or more computers, to generate a path for a work vehicle having an implement linked thereto to travel within a field, the path including a temporary stop position in a peripheral region which is not a work area within the field but is an area provided along at least a portion of an outer periphery of the field, the method comprising:
calculating a space that is defined by a trajectory of the work vehicle and the implement when the work vehicle has performed a predetermined turn, based on a size of the work vehicle, a size of the implement, and a position relationship between the work vehicle and the implement; and
determining the temporary stop position based on the space.

2. The method of claim 1, wherein the calculating the space comprises:
acquiring information of a turning direction and a turning angle of the predetermined turn; and
calculating the trajectory based on the turning direction and the turning angle.

3. The method of claim 1 or 2, wherein the calculating the space comprises:
acquiring information of an upper limit value of a steering angle of the work vehicle that is tolerable when the work vehicle performs the predetermined turn; and
calculating the trajectory based on the upper limit value of the steering angle.

4. The method of any one of claims 1 to 3, wherein the calculating the space comprises:
during travel between the temporary stop position and a travel restart position in the work area after stopping at the temporary stop position, acquiring information of one or more tolerable motions selected from among forward travel, backward travel, right turn, and left turn motions; and
calculating the trajectory based on the one or more tolerable motions.

5. The method of any one of claims 1 to 4, wherein the path includes a turning section between the temporary stop position and a travel restart position within the work area after stopping at the temporary stop position.

6. The method of any one of claims 1 to 5, wherein
the calculating the space comprises:
acquiring information of a method of linkage of the implement with the work vehicle;
calculating the trajectory based on a position relationship between the work vehicle and the implement that depends on the method of linkage; and
the information of the method of linkage includes information as to whether the implement is linked to the work vehicle such that an orientation of the implement is fixed relative to an orientation of the work vehicle.

7. The method of claim 6, wherein the calculating the space comprises:
acquiring information of an upper limit value of an angular difference between the orientation of the work vehicle and the orientation of the implement that is tolerable when the work vehicle performs the predetermined turn in a case where the orientation of the implement is not fixed relative to the orientation of the work vehicle; and
calculating the trajectory based on the upper limit value of the angular difference.

8. The method of any one of claims 1 to 7, wherein the calculating the space comprises:
calculating a first length of the trajectory along a first direction that is parallel or substantially parallel to an orientation of the work vehicle before the predetermined turn; and
within a length of the trajectory along a second direction intersecting the first direction, calculating a second length of a portion of the trajectory that increases in a direction opposite to a direction of the predetermined turn, relative to a length along the second direction of the work vehicle before the predetermined turn.

9. The method of claim 8, wherein the determining the temporary stop position comprises:
determining the temporary stop position so that a rectangle that is determined by the first length and the second length is included in a predetermined region within the peripheral region.

10. The method of claim 9, wherein the predetermined region is in contact with the outer periphery of the field.

11. The method of any one of claims 1 to 10, wherein
the outer periphery of the field includes a plurality of sides; and
the determining the temporary stop position comprises:
determining the temporary stop position so that the temporary stop position is located within a vicinity of one of the plurality of sides and that an orientation of the work vehicle at the temporary stop position is in a direction that is parallel or substantially parallel to a direction in which the one of the plurality of sides extends.

12. The method of any one of claims 1 to 11, wherein the determining the temporary stop position comprises:
acquiring information as to which factor is to be prioritized between a distance of a connection path that connects the temporary stop position and a travel end position in the work area before stopping at the temporary stop position being short, and a curvature of the connection path being small; and
determining the temporary stop position by generating the connection path based on the prioritized factor.

13. The method of any one of claims 1 to 12, wherein
the work area includes a plurality of crop rows; and
a path by which the work vehicle travels in the work area includes a path by which the work vehicle travels among the plurality of crop rows.

14. A travel control system comprising:
a processor configured or programmed to generate a path by carrying out the method of any one of claims 1 to 13; and
a controller configured or programmed to cause a work vehicle to travel along the path that is generated by the processor.

15. A work vehicle comprising:
the travel control system of claim 14;
a travel device including a wheel responsible for steering; and
a driver to drive the travel device.
